# EUROPEAN PATENT SPECIFICATION

(11) **EP 3 943 421 B1**
(45) Date of publication and mention of the grant of the patent: **07.06.2023**
(21) Application number: 20020432.9
(22) Date of filing: 25.09.2020
(51) Int. Cl.: B65G 45/02, B65G 47/248, B65G 47/252

(54) **FRICTION CONTROLLED CONTAINER TWISTING DEVICE**
REIBUNGSGESTEUERTE BEHÄLTERVERDREHVORRICHTUNG
DISPOSITIF DE TORSION DE RÉCIPIENT À FRICTION CONTRÔLÉE

(30) Priority: 22.07.2020 WO PCT/IB2020/056897
(43) Date of publication of application: 26.01.2022
(73) Proprietor: CHP N.V., 9120 Beveren (BE)
(72) Inventor: Turck, Pieter, 9120 Beveren (BE)
(74) Representative: Powis de Tenbossche, Roland

(56) References cited:
- EP-A1- 1 637 482
- CN-A- 110 550 420
- US-A- 3 797 641

## Description

The invention relates to a lubricated device for twisting containers, which are used in conveyor system or conveyor installation.

It is already known to lubricate conveyors for ensuring a correct flow of containers, like cans, bottles, etc. Said coveyors comprise a moving band supporting the bottles or containers, so as to convey the said bottles or containers towards a specific station.

In the existing twisting devices, the containers are entering in the twisting device with the speed of the preceding transport conveyor. The containers are turned or twisted mostly 90° or 180° without any additional driving force in the twisting device. The friction in the contact areas between the containers and the supporting or guiding surfaces of the device is controlled by spraying large amount of water. By using such large amount of water, it has been possible to prevent blockage during the movement of the containers. Said large amount of water is often sprayed at least at the entrance stroke of the the device, but advantageously substantially along the whole twisting path of the device.

For reducing the water consumption, it has been proposed to use a water collector adapted to collect at least part of the huge volume of water flowing through the twisting device. However, said collected water has to be treated before new spraying on the containers.

The containers flowing through the existing devices are thus wetted, whereby the said containers leaving the twisting device have to be dried, in order to prevent a wetting of the followed moving belt, for example intended to convey the bottles towards a packaging installation.

Said huge amount of water is also a source of many drawbacks, such as contamination, accidents for the workers, health problems, blocking problem of containers, problem with glued tags or papers, for containers leaving the wet twisting operation, problems linked for further adhesion of tags, papers, labels, etc.

Mechanical twisting devices are for example disclosed in US 3797641; in US 6116401; in GB 1296189. Such mechanical twisting devices are submitted to a wearing, especially when the flow of containers is high. The wearing of parts of the twisting device can cause damages to the containers, which can lead to huge financial losses.

US3797641 discloses a device for twisting containers while moving said containers along a moving path comprising an at least partly curved path portion with an at least partly curved length path for ensuring that each container moving through the said at least partly curved path portion follows at least a curved movement, said containers having at least an outer facing system, said at least partly curved path portion extending between an inlet for the containers into the at least partly curved path portion and an outlet for containers after moving through the at least partly curved path portion, whereby between said inlet and outlet, the at least partly curved path portion comprises at least:
- a support;
- a first guiding element attached to said support, said first guiding element having at least a first guiding face element adapted for contacting at least a first portion of an outer facing system of the containers moving in the at least partly curved path portion;
- a second guiding element attached to said support, said second guiding element having at least a second guiding face element distant from the first guiding face element and adapted for contacting at least a second portion of the outer facing system of the containers moving in the at least partly curved path portion, said second portion of the outer facing system of the containers being different from the first portion of the outer facing system of the containers;
- a first lubricating means adapted for ensuring a dry lubrication of at least a portion of the first guiding element;
- a second lubricating means adapted for ensuring a dry lubrication of at least a portion of the second guiding element.

The invention relates to a device for twisting containers in a very safe way, while preventing the use of said huge amount of waters, and while keeping the surfaces of the containers dry, while preventing any possible damages of labels, tags, etc. present on the containers' outer face before being twisted. The device of the invention enables also to prevent substantially any blockage of containers in the twisting device, even with high container flow.

It has also been observed that with the device of the invention, the wearing of the parts in contact with the moving containers can be reduced, reducing in this manner any damages to the containers and labels or tags present on them, while reducing possible heating of twisting elements or rods.

The invention relates to a device (1) for twisting containers (2) while moving said containers along a moving path (3) comprising an at least partly curved path portion (3A) comprising a series of guiding elements provided each with lubricating means adapted for ensuring a dry lubrication of at least a portion of the guiding elements by supplying a fluid lubricant selected from the group consisting of liquid lubricant, gazeous lubricant and mixtures thereof in at least two distinct locations of the said guiding elements. The device of the invention enables to control the friction of the containers moving along the at least partly curved guiding elements and thus during the twisting of the containers in the device of the invention.

The device of the invention is a device (1) for twisting containers (2) while moving said containers (having each an outer facing system, such as one or more lateral faces, a top face and a bottom face) along a moving path (3) comprising an at least partly curved path portion (3A) with an at least partly curved length path comprised between 30cm and 500cm for ensuring that each container (2) moving through the said curved path portion follows at least a curved movement, said containers (2) having at least an outer facing system (20), said at least partly curved path portion (3A) extending between an inlet (4) for containers into the at least partly curved path portion (3A) and an outlet (5) for containers (2) after moving through the at least partly curved path portion (3A).

In the device of the invention, between said inlet (4) and outlet (5), the at least partly curved path portion (3A) comprises at least :
- a support (10) ;
- a first guiding element (30) attached to said support (10), said first guiding element (30) having at least a first guiding face element (31) (advantageously a plurality, such as two or three distinct guiding face elements) adapted for contacting (each in the case of a plurality) at least a first portion of the outer facing system (20) of the containers (2) moving in the at least partly curved path portion (3A);
- a second guiding element (40) attached to said support (10), said second guiding element (40) having at least a second guiding face element (41) (advantageously a plurality, such as two or three distinct guiding face elements) distant from the first guiding face element (31) and adapted for contacting (each in the case of a plurality) at least a second portion of the outer facing system (20) of the container (2) moving in the at least partly curved path portion (3A), said second portion of the outer facing system (20) of the containers being different from the first portion of the outer facing system (20) of the containers (2);
- a first lubricating means (32) adapted for ensuring a dry lubrication of at least a portion of the first guiding element (30) by supplying a fluid lubricant selected from the group consisting of liquid lubricant, gazeous lubricant and mixtures thereof or even combinations there of (possibly once a liquid lubricant is used, while at another place or time, a gazeous lubricant is used) along the first guiding face element (31), whereby the first lubricating means (32) has at least (a) a first outlet open element (321) along the the first guiding face element (31) with an open outer surface of less than 100mm² (such as less than 75mm², less than 50mm², less than 25mm², such as less 15mm², preferably less than 10mm² or even more preferably equal or less than 5mm²), (b) a second outlet open element (322) along the first guiding face element (31) with an open surface of less than 100 mm² (such as less than 75mm², less than 50mm², less than 25mm², such as less 15mm², preferably less than 10mm² or even more preferably equal or less than 5mm²), said second outlet open element (322) being distant from the first outlet open element (321) by an at least partly curved path distance of at least 10cm (the first lubricating means can have more than two outlet open elements, but in this case at least one first and another are distant of more than 10cm. One or more outlet open elements can be present between said first and another outlet open elements. For example when using a gazeous lubricant, such as dry air, nitrogen, etc., the outlet open elements are located the one after another on a length path of at least 20cm, with a distance between two successive outlet open elements of 1cm to 5cm, for example) , and (c) a supply connecting system (366) connecting the first outlet open element (321) and the second outlet open element (322) to a connector (327) adapted to be connected to a lubricant supply (100) for supplying said first outlet open element (321) and said second outlet open element (322) of the first lubricating means (32) with the fluid lubricant; and
- a second lubricating means (42) adapted for ensuring a dry lubrication of at least a portion of the second guiding element (40) by supplying the fluid lubricant along the second guiding face element (41), whereby the second lubricating means (42) has at least (a) a first outlet open element (421) along the the second guiding face element (41) with an open outer surface of less than 100mm² (such as less than 75mm², less than 50mm², or even less than 25mm², such as less 15mm², preferably less than 10mm² or even more preferably equal or less than 5mm²), (b) a second outlet open element (422) along the second guiding face element (41) with an open surface of less than 100 mm² (such as less than 75mm², less than 50mm², less than 25mm², such as less 15mm², preferably less than 10mm² or even more preferably equal or less than 5mm²), said second outlet open element (422) of the second lubricating means (42) being distant from the first outlet open element (421) of the second lubricating means (42) by a at least partly curved path distance of at least 10cm (for example from 20cm up to 50cm or even more), and (c) a supply connecting system (466) connecting at least the first outlet open element (421) and the second outlet open element (422) of the second lubricating means (42) to a connector (427) adapted to be connected to a or the lubricant supply (100,110) for supplying said first outlet open element (421) and said second outlet open element (422) of the second lubricating means (42) with the fluid lubricant.

The fluid lubricant is for example a liquid lubricant supplied to the outlet open elements at very low rate, such as per outlet open element, from 0.5 to 500 mm³ (such as from 10mm³ up to 300mm³, advantageously from 20mm³ upto 250mm³, for example 30, 50, 65, 90, 100, 150 and 200mm³) of liquid lubricant per hour. Possible advantageous liquid lubricant is for example DLT-333, a food grade white mineral oil with PTFE and wax. The liquid lubricant is supplied in successive steps, with periods of no supply. For example, periods of supply of liquid lubricant are separated by a period of no supply of liquid lubricant. The duration of a period of supply of liquid lubricant at one outlet open element can be from 1 second up to 300seconds, such as 5 to 200 seconds, advantageously from 10 to 100 seconds, like 20, 30, 40 and 60 seconds. The duration of periods of no supply of liquid lubricant between two periods of liquid lubricant supply can be from 10 seconds upto 600 seconds, such as from 30 seconds upto 500 seconds. The duration of a supply period and of a non supply period can be controlled in function of the container flow rate.

The fluid lubricant can also be a gazeous lubricant under pressure, such as under a pressure of 2 × 10⁵ Pa upto 50 × 10⁵ Pa, like 3 × 10⁵ Pa, 5 × 10⁵ Pa, 10 × 10⁵ Pa and 20 × 10⁵ Pa. The gas can be air, dried air, filtered air, air enriched with one or more additives, nitrogen, CO₂, etc. The gas temperature can be comprised between - 20°C and +50°C, but is preferably comprised between 0°C and +25°C, most preferably between +10°C and +20°C. The gas speed at the outlet open element is for example comprised between 0.1m/s upto 10m/s, such as 0.2, 0.5, 1.0, 2.0 m/s. The gazeous lubricant can be expelled substantially continuously at a rate from 0.01 up to 10 liter/second (volume determined at a temperature of 20°C and a pressure of 1 × 10⁵ Pa), such as 0.05 1/s, 0.1 1/s, 0.5 1/s, 11/s, 3 1/s and 5 1/s.

The outlet open elements are advantageously located along a face portion directed at least partly upwardly, preferably only upwardly, or at least partly vertically or substantially vertically, so as to prevent as much as possible gravity flow of liquid lubricant from the outlet open elements.

When using gazeous lubricant, the outlet open elements are advantageously adapted so that at least a portion of the gazeous lubricant can give an impulse on the containers moving through the at least partly curved path 3A, said impulse being directed on the containers in a direction having at least a component in the direction of their movement, and preferably also in their twisting movement, whereby easing further the twisting of the containers along the path 3A.

According to advantageous embodiments of the device of the invention, the device has one or more of the following details or characteristics:
* at least one of the first outlet open element (321) and the second outlet open element (322) of the first lubricating means (32) and at least one of the first outlet open element (421) and the second outlet open element (422) of the second lubricating means (42) have an outer form selected from the group consisting of a substantially circular outer form with an outer diameter comprised between 0.5mm and 5mm (advantageously from 1mm upto 4mm, such as 1mm, 2mm and 3mm), a substantially ellipse outer form with an equivalent diameter comprised between 0.5mm and 5mm (advantageously from 1mm upto 4mm, such as 1mm, 2mm and 3mm), an elongated outer form with an average width comprised between 0.5mm and 5mm (advantageously from 1mm upto 4mm, such as 1mm, 2mm and 3mm) and an average length greater than the average width, but comprised between 3mm and 50mm (advantageously 5mm upto 30mm, such as 5mm, 10mm, 15mm), and combinations of parts thereof. The equivalent diameter is equal to 4 times the open surface divided by the circumference of the opening.
* at least one of the first outlet open element (321) and the second outlet open element (322) of the first lubricating means (32) and at least one of the first outlet open element (421) and the second outlet open element (422) of the second lubricating means (42) have the form of a groove (G) with an average width comprised between 0.5mm and 5mm (for example advantageously comprised between 1 and 4mm, such as 2mm, 3mm and 4mm) and an average length (L) greater than the average width and comprised between 3mm and 50mm (for example from 5mm upto 20 mm). The groove (G) can have various shapes, and can have the shape of two groove portions connected at one of their ends.
* the first guiding face element (31) of the first guiding element (30) defines an at least partly curved surface adapted to contact substantially continuously a portion of an outer facing system (20) of the container (2) selected from the group consisting of a linear zone with a width of less than 0.5cm (such as less than 2mm, or even 1mm), and a surface zone of less than 5mm² ( such as less than 3mm², 2mm² or even less than 1mm², the said surface being then preferably like a punctual contact surface), while the second guiding face element (41) of the second guiding element (40) defines an at least partly curved surface adapted to contact substantially continuously a portion of an outer facing system (20) of the container (2) selected from the group consisting of a linear zone ith a width of less than 0.5cm (such as less than 2mm, or even 1mm),and a surface zone of less than 5mm² ( such as less than 3mm², 2mm² or even less than 1mm², the said surface being then preferably like a punctual contact surface).
* the first guiding element (31) comprises at least two first guiding face elements distant from each other and selected from the group consisting of at least partly curved rods and at least partly curved elongated elements (301,302), each of said at least two first guiding face elements (301,302) of the first guiding element (31) when defolded in a substantially straight shape having a substantialy curved contact face defining a linear contact face adapted to contact substantially continuously a portion of an outer facing system (20) of the container (2) when moving in the device, said linear contact face having a a width of less than 0.5 mm (such as from 0.1mm up to 0.4mm or even lesser), while the second guiding element (41) comprises at least two second guiding face elements distant from each other and selected from the group consisting of at least partly curved rods and at least partly curved elongated elements (401,402), each of said at least two second guiding face elements (401,402) of the second guiding element (41) when defolded in a substantially straight shape having a substantialy curved contact face defining a linear contact face adapted to contact substantially continuously a portion of an outer facing system (20) of the container (2) when moving in the device, said linear contact face having a a width of less than 0.5mm (for example from 0.1mm up to 0.4mm or even lesser).
* the curved or partly curved rods or curved or partly curved elongated elements (301,302; 401,402) of the first guiding element (31) and/or of the second guiding element (41) are each provided with at least a first passage or channel ending into a first outlet open element (321,421) and a second passage or channel ending into a second outlet open element (322,422) of the first lubricating means (32) or the second lubricating means (42), whereby with respect to the said curved or partly curved rods or curved or partly curved elongated elements (301,302; 401,402) when defolded in a substantially straigth shape, the said first outlet open element (321,421) and the said second outlet open element (322, 422) of each curved or partly curved rod or curved or partly curved elongated elements (301,302;401,402) extend along a substantially flat face of the rod or elongated elements (301,302;401,402) taken into consideration with a width of less than 0.5mm, said first outlet open element (321,421) and said second outlet open element (322, 422) being distant by a distance of at least 10cm. (for example from 10cm up to 100cm, such as 20cm, 30cm, 50cm, 75cm as example only)
* The device is adapted for moving containers (2) having an outer facing system (20) comprising a bottom face (201), a top face (202) and at a lateral facing system (203), whereby the at least partly curved path portion (3A) comprises at least :
   - a first guiding element (30) attached to said support (10), said first guiding element (30) having a first guiding face element (31) adapted for contacting at least a first portion of the lateral facing system (203) of the container (2) moving in the at least partly curved path portion (3A);
   - a second guiding element (40) attached to said support (10), said second guiding element (40) having a second guiding face element (41) distant from the first guiding face element (31) and adapted for contacting at least a second portion of the lateral facing system (203) of the container (2) moving in the at least partly curved path portion (3A), said second portion of the lateral facing system (203) being different from the first portion of the lateral facing system (203) of the container (2);
   - a third guiding element (50) attached to said support (10), said third guiding element (50) having a third guiding face element (51) adapted for contacting at least a portion of the bottom face (201) of the container (2) moving in the at least partly curved path portion (3A);
   - a first lubricating means (32) adapted for ensuring a dry lubrication of at least a portion of the first guiding element (30) by supplying the fluid lubricant along the first guiding face element (31), whereby the first lubricating means (32) has at least (a) a first outlet open element (321) along the first guiding face element (31) with an open outer surface of less than 100mm² (such as less than 75mm², less than 50mm², less than 25mm², such as less 15mm², preferably less than 10mm² or even more preferably equal or less than 5mm²), (b) a second outlet open element (322) along the first guiding face element (31) with an open surface of less than 100 mm² (such as less than 75mm², less than 50mm², less than 25mm², such as less 15mm², preferably less than 10mm² or even more preferably equal or less than 5mm²), said second outlet open element (322) being distant from the first outlet open element (321) by a at least partly curved path distance of at least 10cm, and (c) a supply connecting system (366) connecting the first outlet open element (321) and the second outlet open element (322) to a connector (327) adapted to be connected to a lubricant supply (100) for supplying said first outlet open element (321) and said second outlet open element (322) of the first lubricating means (32) with the fluid lubricant;
   - a second lubricating means (42) adapted for ensuring a dry lubrication of at least a portion of the second guiding element (40) by supplying the fluid lubricant along the second guiding face element (41), whereby the first lubricating means (42) has at least (a) a first outlet open element (421) along the the second guiding face element (41) with an open outer surface of less than 100mm² (such as less than 75mm², less than 50mm², less than 25mm², such as less 15mm², preferably less than 10mm² or even more preferably equal or less than 5mm²), (b) a second outlet open element (422) along the second guiding face element (41) with an open surface of less than 100 mm² (such as less than 75mm², less than 50mm², less than 25mm², such as less 15mm², preferably less than 10mm² or even more preferably equal or less than 5mm²), said second outlet open element (422) being distant from the first outlet open element (421) by an at least partly curved path distance of at least 10cm, and (c) a supply connecting system (466) connecting the first outlet open element (421) and the second outlet open element (422) to a connector (427) adapted to be connected to a or the lubricant supply (100,110) for supplying said first outlet open element (421) and said second outlet open element (422) of the second lubricating means (42) with the fluid lubricant, and
   - a third lubricating means (52) adapted for ensuring a dry lubrication of at least a portion of the third guiding element (50) by supplying the fluid lubricant along the third guiding face element (51), whereby the third lubricating means (52) has at least (a) a first outlet open element (521) along the third guiding face element (51) with an open outer surface of less than 100mm² (such as less than 75mm², less than 50mm², less than 25mm², such as less 15mm², preferably less than 10mm² or even more preferably equal or less than 5mm²), (b) a second outlet open element (522) along the third guiding face element (51) with an open surface of less than 100 mm² (such as less than 75mm², less than 50mm², less than 25mm², such as less 15mm², preferably less than 10mm² or even more preferably equal or less than 5mm²), said second outlet open element (522) being distant from the first outlet open element (521) by an at least partly curved path distance of at least 10cm, and (c) a supply connecting system (566) connecting the first outlet open element (521) and the second outlet open element (522) to a connector (527) adapted to be connected to a or the lubricant supply (100, 110, 120) for supplying said first outlet open element (521) and said second outlet open element (522) of the third lubricating means (52) with the fluid lubricant.
* The lubricant supply system can be one single lubricant supply system for supplying the various guiding face elements, but can also comprises different units, each unit being the adapted for supplying one or more guiding face elements or part(s) thereof with one specific lubricant.
* at least one of the first and second outlet open elements (321,322) of the first lubricating means (32), at least one of the first and second outlet open elements (421,422) of the second lubricating means (42) and at least one of the first and second outlet open elements (521,522) of the third lubricating means (52) have the form of a groove (G) with an average width comprised between 0.5mm and 5mm (such as 1mm, 2mm, 3mm and 4mm) and an average length (L) greater than the average width and comprised between 3mm and 50mm, such as from 0.5 cm up to 2cm, said groove having for example an average width of about 1 to 3mm (average measured with respect to the length of the groove).
* the first guiding face element (31) of the first guiding element (30) defines an at least partly curved surface (31) contacting substantially continuously a portion of the lateral facing system (203) selected from the group consisting of a linear zone with a width of less than 0.5cm (such as less than 2mm, or even 1mm),and a surface zone of less than 5mm² ( such as less than 3mm², 2mm² or even less than 1mm², the said surface being then preferably like a punctual contact surface) of the lateral facing system (203) of the container (2),
   in which the second guiding face element (41) of the second guiding element (40) defines an at least partly curved surface (41) adapted to contact substantially continuously a portion of the lateral facing system (203) selected from the group consisting of a linear zone with a width of less than 0.5cm (such as less than 2mm, or even 1mm),and a surface zone of less than 5mm² ( such as less than 3mm², 2mm² or even less than 1mm², the said surface being then preferably like a punctual contact surface) of the lateral facing system (203) of the container (2), and
   in which the third guiding face element (51) of the third guiding element (50) defines an at least partly curved surface (51) contacting susbstantially continuously at least a portion of the bottom face (201) of the container (2) selected from the group consisting of a linear zone with a width of less than 0.5cm (such as less than 2mm, or even 1mm), and a surface zone of less than 5mm² ( such as less than 3mm², 2mm² or even less than 1mm², the said surface being then preferably like a punctual contact surface) of the bottom face (201) of the container.
* the device is adapted for moving containers (2) having an outer facing system (20) comprising a bottom face (201), a top face (202) and at a lateral facing system (203), whereby the at least partly curved path portion (3A) comprises at least :
   - a first guiding element (30) attached to said support (10), said first guiding element (30) having at least a first guiding face element (31) adapted for contacting at least a first portion of the lateral facing system (203) of the container (2) moving in the at least partly curved path portion (3A);
   - a second guiding element (40) attached to said support (10), said second guiding element (40) having at least a second guiding face element (41) distant from the first guiding face element (31) and adapted for contacting at least a second portion of the lateral facing system (203) of the container (2) moving in the at least partly curved path portion (3A), said second portion of the lateral facing system (203) being different from the first portion of the lateral facing system (203) of the container (2);
   - a third guiding element (50) attached to said support (10), said third guiding element (50) having a third guiding face element (51) adapted for contacting at least a portion of the bottom face (201) of the container (2) moving in the at least partly curved path portion (3A);
   - a fourth guiding element (60) attached to said support (10), said fourth guiding element (60) having a fourth guiding face element (61) adapted for contacting at least a second portion of the top face (202) of the container (2) moving in the at least partly curved path portion (3A);
   - a first lubricating means (32) adapted for ensuring a dry lubrication of at least a portion of the first guiding element (30) by supplying the fluid lubricant along the first guiding face element (31), whereby the first lubricating means (32) has at least (a) a first outlet open element (321) along the first guiding face element (31) with an open outer surface of less than 100mm² (such as less than 75mm², less than 50mm², less than 25mm², such as less 15mm², preferably less than 10mm² or even more preferably equal or less than 5mm²), (b) a second outlet open element (322) along the first guiding face element (31) with an open surface of less than 100 mm² (such as less than 75mm², less than 50mm², less than 25mm², such as less 15mm², preferably less than 10mm² or even more preferably equal or less than 5mm²), said second outlet open element (322) being distant from the first outlet open element (321) by a at least partly curved path distance of at least 10cm, and (c) a supply connecting system (366) connecting the first outlet open element (321) and the second outlet open element (322) to a connector (327) adapted to be connected to a lubricant supply (100) for supplying said first outlet open element (321) and said second outlet open element (322) of the first lubricating means (32) with the fluid lubricant;
   - a second lubricating means (42) adapted for ensuring a dry lubrication of at least a portion of the second guiding element (40) by supplying the fluid lubricant along the second guiding face element (41), whereby the first lubricating means (42) has at least (a) a first outlet open element (421) along the the second guiding face element (41) with an open outer surface of less than 100mm² (such as less than 75mm², less than 50mm², less than 25mm², such as less 15mm², preferably less than 10mm² or even more preferably equal or less than 5mm²), (b) a second outlet open element (422) along the second guiding face element (41) with an open surface of less than 100 mm² (such as less than 75mm², less than 50mm², less than 25mm², such as less 15mm², preferably less than 10mm² or even more preferably equal or less than 5mm²), said second outlet open element (422) being distant from the first outlet open element (421) by an at least partly curved path distance of at least 10cm, and (c) a supply connecting system (466) connecting the first outlet open element (421) and the second outlet open element (422) to a connector (427) adapted to be connected to a or the lubricant supply (100,110) for supplying said first outlet open element (421) and said second outlet open element (422) of the second lubricating means (42) with the fluid lubricant, and
   - a third lubricating means (52) adapted for ensuring a dry lubrication of at least a portion of the third guiding element (50) by supplying the fluid lubricant along the third guiding face element (51), whereby the third lubricating means (52) has at least (a) a first outlet open element (521) along the third guiding face element (51) with an open outer surface of less than 100mm² (such as less than 75mm², less than 50mm², less than 25mm², such as less 15mm², preferably less than 10mm² or even more preferably equal or less than 5mm²), (b) a second outlet open element (522) along the third guiding face element (51) with an open surface of less than 100 mm², said second outlet open element (522) being distant from the first outlet open element (521) by an at least partly curved path distance of at least 10cm, and (c) a supply connecting system (566) connecting the first outlet open element (521) and the second outlet open element (522) to a connector (527) adapted to be connected to a or the lubricant supply (100, 110, 120) for supplying said first outlet open element (521) and said second outlet open element (522) of the third lubricating means (52) with the fluid lubricant, and
   - a fourth lubricating means (62) adapted for ensuring a dry lubrication of at least a portion of the fourth guiding element (60) by supplying the fluid lubricant along the fourth guiding face element (61), whereby the fourth lubricating means (62) has (a) a first outlet open element (621) along the the fourth guiding face with an open outer surface of less than 100mm² (such as less than 75mm², less than 50mm², less than 25mm², such as less 15mm², preferably less than 10mm² or even more preferably equal or less than 5mm²), (b) a second outlet open element (622) along the fourth guiding face element (61) with an open surface of less than 100 mm² (such as less than 75mm², less than 50mm², less than 25mm², such as less 15mm², preferably less than 10mm² or even more preferably equal or less than 5mm²), said second outlet open element (622) being distant from the first outlet open element (621) by a curved path distance of at least 10cm, and (c) a supply connecting system (666) connecting the first outlet open element (621) and the second outlet open element (622) to a connector (627) adapted to be connected to a or the lubricant supply (100,110,120,130) for supplying said first outlet open element (621) and said second outlet open element (622) of the fourth lubricating means (62) with the fluid lubricant.
* at least one of the first and second opening outlets (321,322) of the first lubricating means (32), at least one of the first and second opening outlets (421,422) of the second lubricating means (42), at least one of the first and second opening outlets (521,522) of the third lubricating means (52), and at least one of the first and second opening outlets (621,622) of the fourth lubricating means (62) have the form of a groove (G) with an average width comprised between 0.5mm and 5mm and an average length (L) greater than the average width and comprised between 3mm and 50mm, such as for example from 0.5cm up to 2cm.
* the first guiding face element (31) of the first guiding element (30) defines an at least partly curved surface (303) contacting substantially continuously a portion of the lateral facing system (203) selected from the group consisting of a linear zone with a width of less than 0.5cm and a surface zone of less than 5mm² of the lateral facing system (203),
   in which the second guiding face element (41) of the second guiding element (40) defines a curved surface contacting substantially continuously a portion of the lateral facing system (203) selected from the group consisting of a linear zone a width of less than 0.5cm (such as less than 2mm, or even 1mm),and a surface zone of less than 5mm² ( such as less than 3mm², 2mm² or even less than 1mm², the said surface being then preferably like a punctual contact surface) of the lateral facing system (203),
   in which the third guiding face element (51) of the third guiding element (50) defines a curved surface contacting susbstantially continuously at least a portion of the bottom face (201) of the container (2) selected from the group consisting of a linear zone a width of less than 0.5cm (such as less than 2mm, or even 1mm),and a surface zone of less than 5mm² ( such as less than 3mm², 2mm² or even less than 1mm², the said surface being then preferably like a punctual contact surface) of the bottom face (201), and
   in which the fourth guiding face element (61) of the fourth guiding element (60) defines a curved surface contacting susbstantially continuously at least a portion of the top face (202) of the container (2) selected from the group consisting of a linear zone a width of less than 0.5cm (such as less than 2mm, or even 1mm),and a surface zone of less than 5mm² ( such as less than 3mm², 2mm² or even less than 1mm², the said surface being then preferably like a punctual contact surface) of the top face (202).
* at least one of the first and second outlet open elements (321,322) of the first lubricating means (32), at least one of the first and second outlet open elements (421,422) of the second lubricating means (42), at least one of the first and second outlet open elements (521,522) of the third lubricating means (52), and at least one the first and second outlet open elements (621,622) of the fourth lubricating means (62) have the form of a groove (G) with an average width comprised between 0.5mm and 5mm and an average length (L) greater than the average width and comprised between 3mm and 50mm.
* the first guiding face element (31) of the first guiding element (30) defines an at least partly curved surface (31) contacting substantially continuously a portion of the lateral facing system (203) selected from the group consisting of a linear zone a width of less than 0.5cm (such as less than 2mm, or even 1mm),and a surface zone of less than 5mm² ( such as less than 3mm², 2mm² or even less than 1mm², the said surface being then preferably like a punctual contact surface) of the lateral facing system (203),
   in which the second guiding face element (41) of the second guiding element (40) defines an at least partly curved surface (41) adapted to contact substantially continuously a portion of the lateral facing system (203) selected from the group consisting of a linear zone a width of less than 0.5cm (such as less than 2mm, or even 1mm),and a surface zone of less than 5mm² ( such as less than 3mm², 2mm² or even less than 1mm², the said surface being then preferably like a punctual contact surface) of the lateral facing system (203),
   in which the third guiding face element (51) of the third guiding element (50) defines an at least partly curved surface (51) contacting susbstantially continuously at least a portion of the bottom face (201) of the container (2) selected from the group consisting of a linear zone a width of less than 0.5cm (such as less than 2mm, or even 1mm), and a surface zone of less than 5mm² ( such as less than 3mm², 2mm² or even less than 1mm², the said surface being then preferably like a punctual contact surface) of the bottom face (201), and
   in which the fourth guiding face element (61) of the fourth guiding element defines an at least partly curved surface (61) contacting susbstantially continuously at least a portion of the top face (202) of the container selected from the group consisting of a linear zone a width of less than 0.5cm (such as less than 2mm, or even 1mm),and a surface zone of less than 5mm² ( such as less than 3mm², 2mm² or even less than 1mm², the said surface being then preferably like a punctual contact surface) of the top face (202).
* the first lubricating means (32) is adapted for ensuring a dry lubrication of at least a portion of the first guiding element (30) by supplying the fluid lubricant along the first guiding face element (31), whereby the first lubricating means (32) has at least (a) a first outlet open element (321) along the the first guiding face element (31) with an open outer surface of less than 100mm² (such as less than 75mm², less than 50mm², less than 25mm², such as less 15mm², preferably less than 10mm² or even more preferably equal or less than 5mm²), (b) a second outlet open element (322) along the first guiding face element (31) with an open surface of less than 100 mm² (such as less than 75mm², less than 50mm², less than 25mm², such as less 15mm², preferably less than 10mm² or even more preferably equal or less than 5mm²), said second outlet open element being distant from the first outlet open element by an at least partly curved path distance of at least 50cm, (c) a third outlet open element (323) along the first guiding face element (31) with an open surface of less than 100 mm² (such as less than 75mm², less than 50mm², less than 25mm², such as less 15mm², preferably less than 10mm² or even more preferably equal or less than 5mm²), said third outlet open element being distant from the first outlet open element (321) by an at least partly curved path distance of at least 100cm and from the second outlet open element (322) by a distance of at least 50cm, and (d) a supply connecting system (366) connecting the first outlet open element (321), the second outlet open element (322) and the third outlet open element (323) to at least a connector (327) adapted to be connected to a lubricant supply (100) for supplying said first outlet open element (321), said second outlet open element (322) and said third outlet open element (323) of the first lubricating means (32) with the fluid lubricant; and
   in which the second lubricating means (42) is adapted for ensuring a dry lubrication of at least a portion of the second guiding element (40) by supplying the fluid lubricant along the second guiding face element (41), whereby the second lubricating means (42) has at least (a) a first outlet open element (421) along the the first guiding face element (41) with an open outer surface of less than 100mm² (such as less than 75mm², less than 50mm², less than 25mm², such as less 15mm², preferably less than 10mm² or even more preferably equal or less than 5mm²), (b) a second outlet open element (422) along the first guiding face element (41) with an open surface of less than 100 mm² (such as less than 75mm², less than 50mm², less than 25mm², such as less 15mm², preferably less than 10mm² or even more preferably equal or less than 5mm²), said second outlet open element (422) being distant from the first outlet open element by an at least partly curved path distance of at least 50cm, (c) a third outlet open element (423) along the second guiding face element (41) with an open surface of less than 100 mm² (such as less than 75mm², less than 50mm², less than 25mm², such as less 15mm², preferably less than 10mm² or even more preferably equal or less than 5mm²), said third outlet open element (423) being distant from the first outlet open element (421) by an at least partly curved path distance of at least 100cm and from the second outlet open element (422) by a distance of at least 50cm, and (d) a supply connecting system (466) connecting the first outlet open element (421), the second outlet open element (422) and the third outlet open element (423) to at least a connector (427) adapted to be connected to a or the lubricant supply (100,110) for supplying said first outlet open element (421), said second outlet open element (422) and said third outlet open element (423) of the second lubricating means with the fluid lubricant .
* at least for the first and second lubricating means (32,42), each of the first outlet open element (321,421) and the second outlet open element (322,422) is associated with a distinct means for controlling the supply of lubricant.
* the device comprising a series of lubricating means selected from the group consisting of at least the first and second lubricating means (32,42), as well as at least one of the third and fourth lubricating means (52,62), each of the at least first outlet open element and second outlet open elements (321,322,421,422,521,522,621,622) of the said series of lubricating means is associated with a distinct means (900) for controlling the supply of lubricant to the outlet open element in consideration.
* The device comprises a centralised supply system (1000,100,110,120,130,140) adapted for supplying and/or for controlling the supply of lubricant under pressure at least to the first lubricating means (32) and to the second lubricating means (42), as well as advantageously at least to one of the third lubricating means (52) and/or fourth lubricating means (62).
* The device comprises a guiding box (200) provided with at least the first guiding element (30) and the second guiding element (40), and possibly the third and/or fourth guiding elements (50,60).
* the moving path (3) comprising the at least partly curved path portion or portions (3A) with an at partly curved length path comprised between 50cm and 300cm comprises at least a first substantially linear path portion (3B) and a second substantially linear path portion (3C) distant from the first substantially linear path portion (3B), whereby a curved path portion (3D) is located between the said first substantially linear path portion (3B) and the said second substantially linear path portion (3C), and whereby the first outlet open element (321) of the first lubricating means (32) and the first outlet open element (421) of the second lubricating means (42) are located in the first substantially linear path portion (3B) for ensuring a dry lubrication of respectively at least a substantially linear portion of the first guiding element (30) and at least a substantially linear portion of the second guiding element (40).
* the first outlet open element (521) of the third lubricating means (52) and/or the first outlet open element (621) of the fourth lubricating means (62) is/are located in the first substantially linear path portion (3B) of the moving path (3) for ensuring a dry lubrication of respectively at least a substantially linear portion of the third guiding element (50) and/or at least a substantially linear portion of the fourth guiding element (60).
* the second outlet open element (322) of the first lubricating means (32) and the second outlet open element (422) of the second lubricating means (42) are located in the second substantially linear path portion (42) for ensuring a dry lubrication of respectively at least a substantially linear portion of the first guiding element (30) and a substantially linear portion of the second guiding element (40).
* the second outlet open element (522) of the third lubricating means (52) and/or the second outlet open element (622) of the fourth lubricating means (62) is/are located in the second substantially linear path portion (6C) for ensuring a dry lubrication of respectively at least a substantially linear portion of the third guiding element (50) and at least a substantially linear portion of the fourth guiding element (60).
* at least one guiding element selected from the group consisting of the first guiding element (30), the second guiding element (40), the third guiding element (50), and the fourth guiding element (60) before being at least partly curved or after development as an linear element has substantially the shape of a rod or tube provided with at least one portion with a substantially flat face.
* at least one guiding element selected from the group consisting of the first guiding element (30), the second guiding element (40), the third guiding element (50), and the fourth guiding element (60) has substantially the shape of a rod or tube provided with a series of lateral openings placed along a helix or a kind of helix like line .
* at least one guiding element selected from the group consisting of the first guiding element (30), the second guiding element(40), the third guiding element (50), and the fourth guiding element (60) is shaped so as to define at each moment of the twisting of a conatainer, a linear contact zone between the outer surface of the container and the at least one guiding element with a length of less than 0.5cm (such as less than 2mm, or even 1mm),and a surface contact zone between the outer surface of the container and the at at least one guiding element of less than 5mm²( such as less than 3mm², 2mm² or even less than 1mm², the said surface being then preferably like a punctual contact surface) with a face system of the container moving along the one considered guiding element.
* at least one guiding element selected from the group consisting of the first guiding element (30), the second guiding element (40), the third guiding element (50), and the fourth guiding element (60) comprises at least two elongated distinct element portions or parts, which are each shaped so as to define at each moment of the twisting of a conatainer, a linear contact zone between the outer surface of the container and an elongated distinct guiding element of said at least one guiding element with a width or length of less than 0.5cm (such as less than 2mm, or even 1mm),and a surface contact zone between the outer surface of the container and an elongated distinct guiding element of said at least one guiding element of less than 5mm²( such as less than 3mm², 2mm² or even less than 1mm², the said surface being then preferably like a punctual contact surface) with a face system (20) of the container (2) moving along the one considered guiding element.
* the said at least one guiding element or each elongated element of the said at least one guiding element (30,40,50,60) comprises at least one tube portion with a face provided with at least the first outlet open element (321,421,521,621) and/or the second outlet open element (322,422,522,622), the said tube portion being adapted for supplying lubricant from one or more lubricant supply or supplies (100,110,120,130) to the said at least the first outlet open element (321,421,521,621) and/or the second outlet open element (322,422,522,622). The tube portion can be part of the supply connecting system or systems (366,466,566,666).
* the said at least one guiding element or each elongated element of the said at least one guiding element comprises a tube element with a face provided with at least the first outlet open element (321,421,521,621) and the second outlet open element (322,422,522,622), the said tube portion being adapted for supplying lubricant from one or more lubricant supply or supplies (100,110,120,130) to the said at least the first outlet open element (321,421,521,621) and the second outlet open element (322,422,522,622). The tube portion can be part of the supply connecting system or systems (366,466,566,666).

* at least one guiding element selected from the group consisting of the first guiding element (30), the second guiding element (40), the third guiding element (50), and the fourth guiding element (60) is provided with a cooling system, said cooling system being advantageously in the form of a tube or channel adapted to be connected or associated to a coolant supply means (200).
* at least one guiding element selected from the group consisting of the first guiding element (30), the second guiding element (40), the third guiding element (50), and the fourth guiding element (60) is provided or associated to a temperature sensor (901).
* The device associated to a control system receiving one or more information or signals from one or more sensors, for controlling lubrication steps and/or for controlling a cooling step and/or for controlling a conveyor speed.
* The device for moving containers following a central moving direction (MC) parallel to a central twisting axis, in which at least a gazeous lubricant under pressure is used as the fluid lubricant for at least a portion of a guiding face tube element selected from the group consisting of the first guiding face element, the second guiding face element, the third guiding face element and the fourth guiding face element, in which the said portion of the guiding face tube element (800) is provided with a series of injector openings (800,810) distant the one from the other by a distance of less than 5cm, said injector openings being adapted for expelling the gazeous lubricant along a central direction (820A) having at least a direction composant parallel to the central moving direction (MC).
* at least some injector openings (800,810) are adapted for directing (820A) a flow of gazeous lubricant in order to ease the twisting of containers.
* any combinations of two or more than two of the above disclosed details or characteristics of advantageous embodiments.

The invention relates also to an conveyor for moving containers (2) along a moving path (3A), said conveyor comprising at least a device of the invention as disclosed hereabove.

Another object of the invention is the use of a twisting device according to the invention as disclosed here above, for ensuring a twisting of containers while moving along the twisting device.

In an embodiment of said use, the temperature of the at least one guiding element (30,40,50,60) is measured for controlling a cooling of at least one guiding element (30,40,50,60), and/or for controlling the supply of lubricant to the said at least one guiding element (30,40,50,60).

Details of the invention will now be disclosed with reference to the attached drawings of preferred embodiments of the invention given as example only.

### Brief description of the drawings

In said drawings :
Fig 1 is a side view of a twisting device of the invention comprising eight at least partly curved elongated elements;
Fig 2 is a view of a bottle to be twisted in the twisting device of Fig 1, while Fig 2A is a view of a can to be twisted in a device similar to the device of Fig 1;
Fig 3 to 7 are cross section views of the device of Fig 1 respectively along the lines III-III; IV-IV, V-V, VI-VI and VII-VII ;

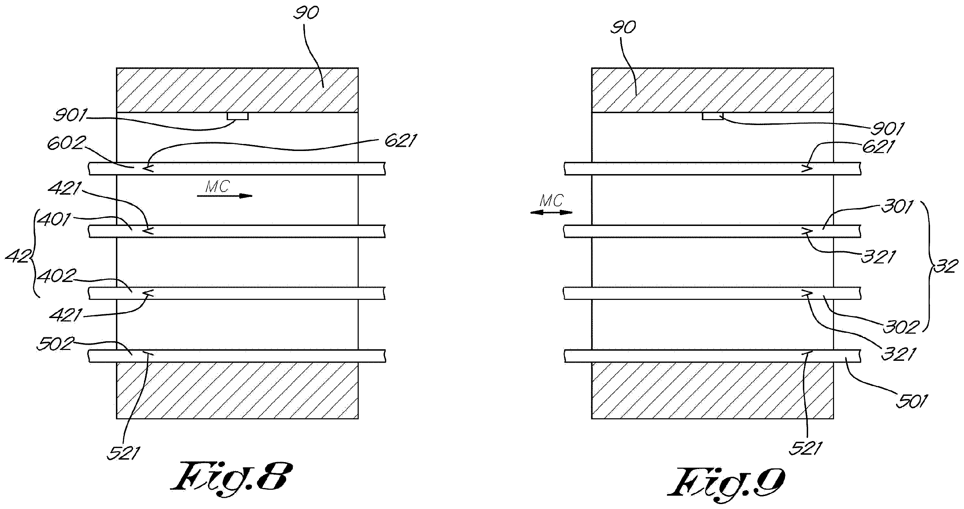

Fig 8 and 9 are cross section views of Fig 3 along the lines VIII-VIII and IX-IX;

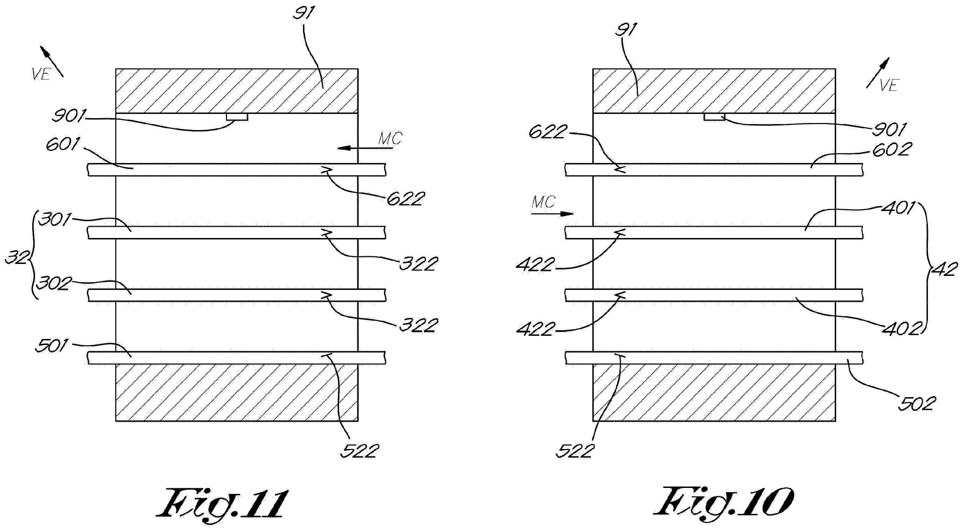

Fig 10 and 11 are cross section views of Fig 4 along the lines X-X and XI-XI;

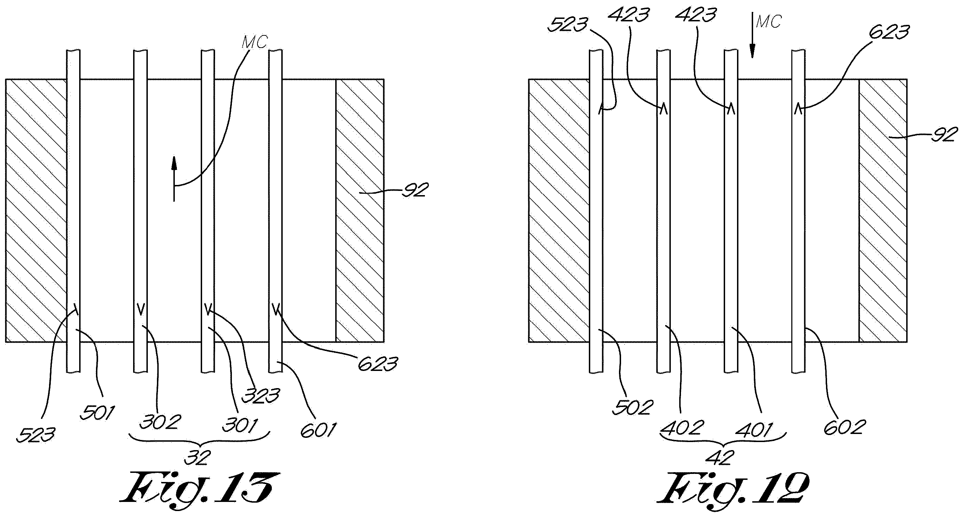

Fig 12 and 13 are cross section views of Fig 5 along the lines XII-XII and XIII-XIII;
Fig 14 is an enlarged view of a face portion of a guiding element contacting a face of the bottle or container;
Fig 15 is an enlarged cross section view of a portion (800) of the guiding element at a location of an outlet open element (line XV-XV);
Fig 15A and 15B are cross section views of the tube portion 800 of Fig 14 respectively along the line XVA-XVA, and XVB-XVB.
Fig 16 is a schematic control chart of the circuit of lubricant for the twisting device of Fig 1;
Fig 17 is a general view of a twisting device shaped as a box;
Figure 18 is view of a tube portion 800, before being torsaded, for forming a guiding element of a twisting device of the invention, said tube portion being adapted for a gazeous lubricant, and
Fig 19 is a cross-section view of the tube portion 800 of Fig 18, along the lines XIX-XIX.

### Description of preferred embodiments

The following description is given as examples only of preferred embodiments.

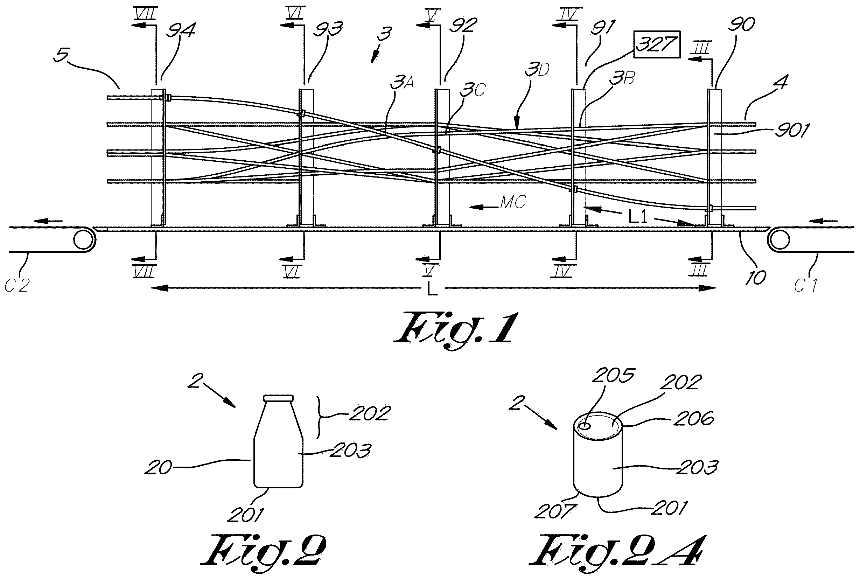

The device of Fig 1 is a device (1) for twisting containers (2) while moving said containers along a moving path (3) comprising an at least partly curved path portion (3A) with an at least partly curved length path L comprised between 30cm and 500cm, such as between 50cm and 300cm for ensuring that each container (2) moving through the said at least partly curved path portion follows at least a curved movement or a twisting movement.

The containers to be twisted (for example movement of rotation of about +90° (vertical position towards a horizontal position) followed by a movement of rotation of -90° (horizontal position back to the initial vertical position) have each a cylindric face (203), said containers (2) having at least an outer facing system (20), said at least partly curved path portion (3A) extending between an inlet (4) of containers into the at least partly curved path portion (3A) and an outlet (5) of containers (2) from the at least partly curved path portion (3A). MC designated the flow direction of the containers through the twisting device.

The containers to be moved shown as example in Fig 2 (like a bottle) has an outer facing system 20 consisting of a cylindrical lateral body face 203, a bottom face 201, a top face system 202 (comprising the shoulder portion, the neck portion and the upper ring, as well as the closure element). The containers are for example filled with a liquid to be shaked or have to twisted for checking the correct closure of the containers. The containers can also be a can as shown in perspective in Fig 2A, the bottom face 201 is similar to the top face 202, except that there is no tearing opening system 205 along the bottom face. The bottom face 201 and the top face 202 are each provided with a circular rounded edge 206,207, adapted to contact one or more guiding rods during the twisting movement.

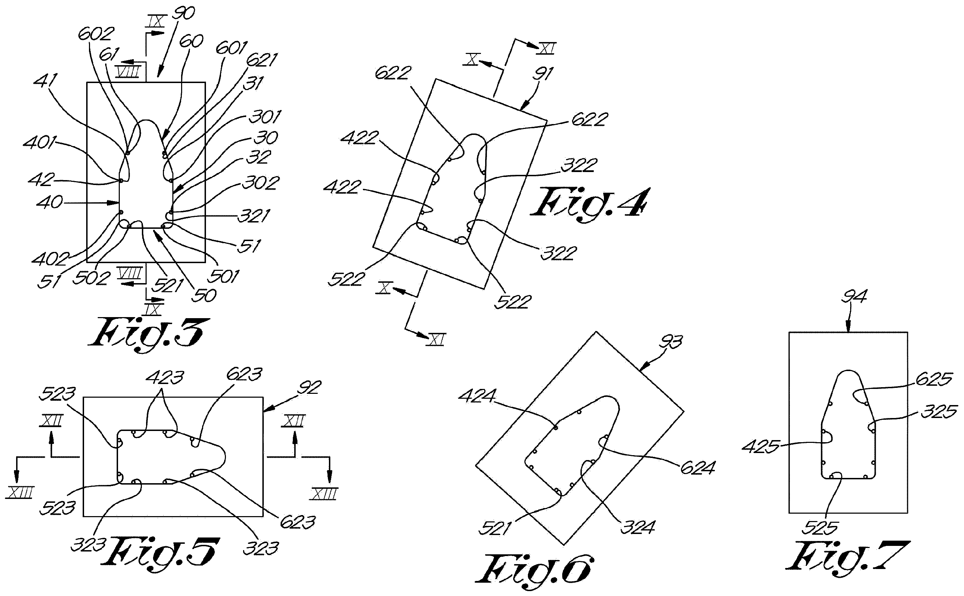

In the device of the invention, between said inlet (4) and outlet (5), the at least partly curved path portion (3A) comprises at least :
- a support (10) ;
- five lubricating stations 90,91,92,93,94 distant the one from the other (in the embodiment shown, lubricating station 90 is equivalent to lubricating station 94, while lubricating station 91 is equivalent to lubricating station 93), and
- a series of guiding elements (30,40,50,60 - see fig 3) for guiding the bottles during their movement from the inlet lurbicating station 90 towards the outlet lubricating station 94, the inlet station receiving bottles from a conveyor C1, while a outlet conveyor C2 collect the containers 2 after being twisted.

The lubricating stations can be shaped as independent similar body to be connected then the one to another by curved elements. The support 10 is then provided with supporting element for ensuring the required angular position of each lubrication stations (90-94). In the device of Fig 1, a liquid lubricant is used.

The series of guiding elements comprises :
- a first guiding element (30) attached to said support (10), said first guiding element (30) having two elongated tubes 301,302 having each a first guiding face element (31) adapted for contacting at least a first portion of the lateral face 203 of the container 2 moving in the at least partly curved path portion (3A) (each elongated tube 301,302 has a substantially continuous at least partly curved contact area or band with the lateral face 203 of the container during its movement from the inlet 4 to the outlet 5, said contact area or band having a width of less than 0.5cm, advantageously less than 0.2mm, preferably less than 0.1mm. The contact area of the container on the each elongated tube at each moment of the twisting is less than 5mm², advantageously less than 2mm².) ;
- a second guiding element (40) attached to said support (10), said second guiding element (40) having two elongated tube 401,402 having each a second guiding face element (41) distant from the first guiding face element (31) and adapted for contacting at least a second portion of the outer lateral face 203 of the container (2) moving in the at least partly curved path portion (3A), said second portion of the outer lateral face 203 of the container being different from the first portion of the outer lateral face 203 of the container (2) when contacting the first guiding element (each elongated tube 401,402 has a substantially continuous at least partly curved contact area or band with the lateral face 203 of the container during its movement from the inlet 4 to the outlet 5, said contact area or band having a width of less than 0.5cm, advantageously less than 0.2mm, preferably less than 0.1mm. The contact area of the container on the each elongated tube at each moment of the twisting is less than 5mm², advantageously less than 2mm².) ;
- a third guiding element (50) attached to said support (10), said third guiding element (50) having two elongated tubes 501,502 distant the one from the other, each of said tube 501,502 having a third guiding face element (51) adapted for contacting at least a portion of the bottom face (201) of the container (2) moving in the at least partly curved path portion (3A) (each elongated tube 501,502 has a substantially continuous at least partly curved contact area or band with the bottom face 201 of the container during its movement from the inlet 4 to the outlet 5, said contact area or band having a width of less than 0.5cm, advantageously less than 0.2mm, preferably less than 0.1mm. The contact area of the container on the each elongated tube at each moment of the twisting is less than 5mm², advantageously less than 2mm².) ;

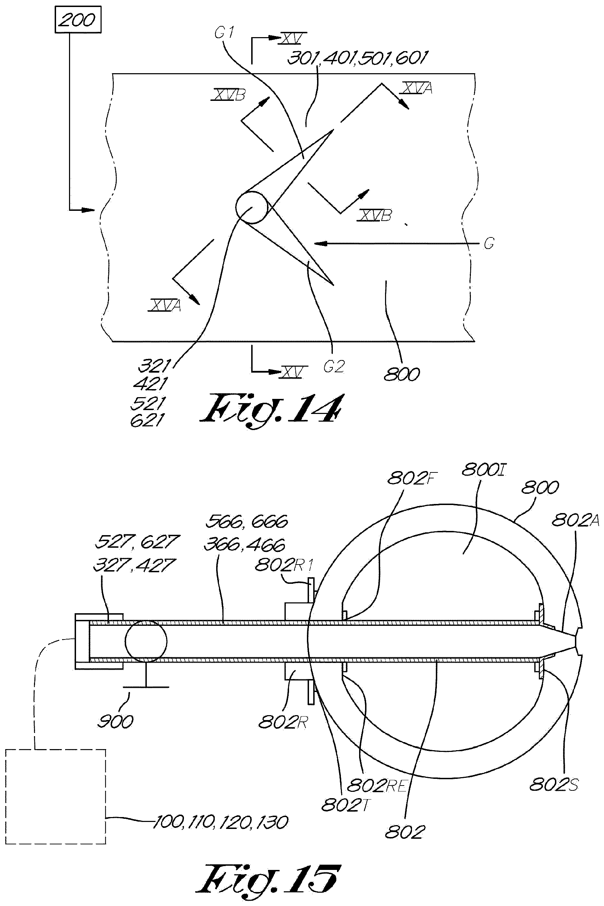

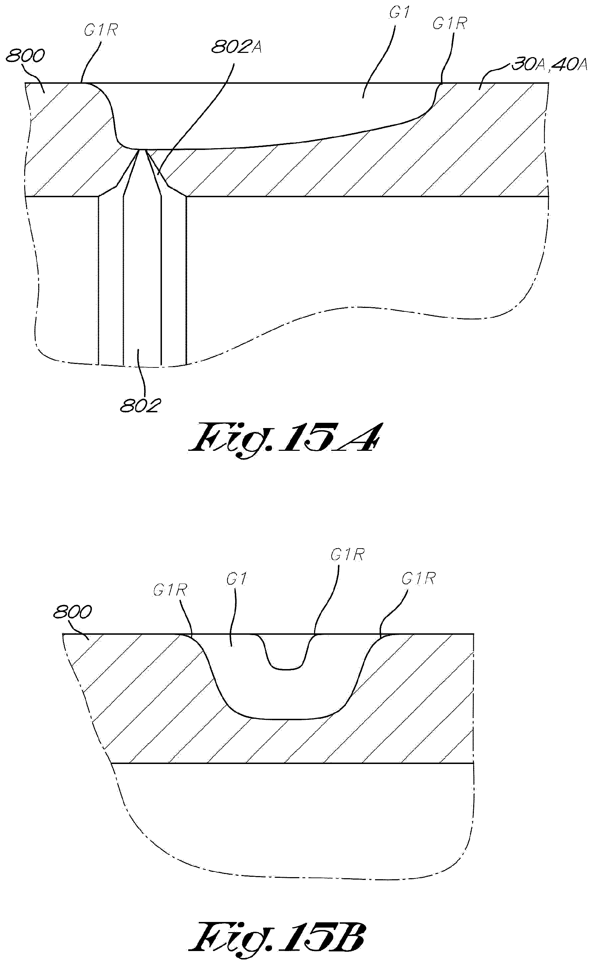

- a fourth guiding element (60) attached to said support (10), said fourth guiding element (60) having two distinct elongated tube 601,602 having each a fourth guiding face element (61) adapted for contacting at least a second portion of the top face or neck or shoulder portion (202) of the container (2) moving in the at least partly curved path portion (3A) (each elongated tube 601,602 has a substantially continuous at least partly curved contact area or band with the top face or neck or shoulder portion 202 of the container during its movement from the inlet 4 to the outlet 5, said contact area or band having a width of less than 0.5cm, advantageously less than 0.2mm, preferably less than 0.1mm. The contact area of the container on the each elongated tube at each moment of the twisting is less than 5mm², advantageously less than 2mm².);
- a first lubricating means (32) adapted for ensuring a dry lubrication of at least a portion of the elongated tubes 301,302 of the first guiding element (30) by supplying the fluid lubricant along the first guiding face element (31), whereby for each elongated tubes 301,302, the first lubricating means (32) has at least (a) at the first lubrication inlet station (90), a first outlet open element (321) along the the first guiding face element (31) with an open outer surface of less than 100mm² (such as less than 75mm², less than 50mm², less than 25mm², such as less 15mm², preferably less than 10mm² or even more preferably equal or less than 5mm²), (b) at the second lubrication station 91, a second outlet open element (322) along the first guiding face element (31) with an open surface of less than 100 mm² (such as less than 75mm², less than 50mm², less than 25mm², such as less 15mm², preferably less than 10mm² or even more preferably equal or less than 5mm²), said second outlet open element (322) being distant from the first outlet open element (321) by an at least partly curved path distance (L1) of at least 20cm, (c) at the third lubrication station 92, a third outlet open element (323) along the first guiding face element (31) with an open surface of less than 100 mm² (such as less than 75mm², less than 50mm², less than 25mm², such as less 15mm², preferably less than 10mm² or even more preferably equal or less than 5mm²), said third outlet open element (323) being distant from the second outlet open element (322) by an at least partly curved path distance of at least 10cm (advantageously at least 20cm), (d) at the fourth lubrication station 93, a fourth outlet open element (324) along the first guiding face element (31) with an open surface of less than 100 mm² (such as less than 75mm², less than 50mm², less than 25mm², such as less 15mm², preferably less than 10mm² or even more preferably equal or less than 5mm²), said fourth outlet open element (324) being distant from the third outlet open element (323) by an at least partly curved path distance of at least 10cm (advantageously at least 20cm), (e) at the fifth lubrication station 94 (outlet station), a fifth outlet open element (325) along the first guiding face element (31) with an open surface of less than 100 mm² (such as less than 75mm², less than 50mm², less than 25mm², such as less 15mm², preferably less than 10mm² or even more preferably equal or less than 5mm²), said fifth outlet open element (325) being distant from the fourth outlet open element (324) by an at least partly curved path distance of at least 10cm (advantageously at least 20cm), and (f) a supply connecting system (366) connecting each of the first outlet open element (321), the second outlet open element (322), the third outlet open element, the fourth outlet open element , and the fifth outlet open element 325 of each elongated tube 301,302 to a connector (327) (see fig 15 showing one outlet connected to the connecting system 366) adapted to be connected to a lubricant supply (100) for supplying said first outlet open element (321), said second outlet open element (322), said third outlet open element (323), said fourth outlet open element (324) and said fifth outlet open element (325) of the first lubricating means (32) with the fluid lubricant (when required, microdoses of liquid lubricant);
- a second lubricating means (42) adapted for ensuring a dry lubrication of at least a portion of the elongated tubes 401,402 of the second guiding element (40) by supplying the fluid lubricant along the second guiding face element (41), whereby for each elongated tubes 401,402, the second lubricating means (32) has at least (a) at the first lubrication inlet station (90), a first outlet open element (421) along the the second guiding face element (41) with an open outer surface of less than 100mm² (such as less than 75mm², less than 50mm², less than 25mm², such as less 15mm², preferably less than 10mm² or even more preferably equal or less than 5mm²), (b) at the second lubrication station 91, a second outlet open element (422) along the second guiding face element (41) with an open surface of less than 100 mm² (such as less than 75mm², less than 50mm², less than 25mm², such as less 15mm², preferably less than 10mm² or even more preferably equal or less than 5mm²), said second outlet open element (422) being distant from the first outlet open element (421) by an at least partly curved path distance of at least 10cm, (c) at the third lubrication station 92, a third outlet open element (423) along the second guiding face element (41) with an open surface of less than 100 mm² (such as less than 75mm², less than 50mm², less than 25mm², such as less 15mm², preferably less than 10mm² or even more preferably equal or less than 5mm²), said third outlet open element (423) being distant from the second outlet open element (422) by an at least partly curved path distance of at least 10cm, (d) at the fourth lubrication station 93, a fourth outlet open element (424) along the second guiding face element (41) with an open surface of less than 100 mm² (such as less than 75mm², less than 50mm², less than 25mm², such as less 15mm², preferably less than 10mm² or even more preferably equal or less than 5mm²), said fourth outlet open element (424) being distant from the third outlet open element (423) by an at least partly curved path distance of at least 10cm, (e) at the fifth lubrication station 94 (outlet station), a fifth outlet open element (425) along the second guiding face element (41) with an open surface of less than 100 mm² (such as less than 75mm², less than 50mm², less than 25mm², such as less 15mm², preferably less than 10mm² or even more preferably equal or less than 5mm²), said fifth outlet open element (425) being distant from the fourth outlet open element (424) by an at least partly curved path distance of at least 10cm, and (f) a supply connecting system (466) connecting each of the first outlet open element (421), the second outlet open element (422), the third outlet open element, the fourth outlet open element and fifth outlet open element 425 of each elongated tube 401,402 to a connector (427) (see fig 15) adapted to be connected to a lubricant supply (100,110) for supplying said first outlet open element (421), said second outlet open element (422), said third outlet open element (423), said fourth outlet open element (424) and said fifth outlet open element (425) of the third lubricating means (42) with the fluid lubricant (when required);
- a third lubricating means (52) adapted for ensuring a dry lubrication of at least a portion of the elongated tubes 501,502 of the third guiding element (50) by supplying the fluid lubricant along the second guiding face element (51), whereby for each elongated tubes 501,502, the second lubricating means (52) has at least (a) at the first lubrication inlet station (90), a first outlet open element (521) along the the third guiding face element (51) with an open outer surface of less than 100mm² (such as less than 75mm², less than 50mm², less than 25mm², such as less 15mm², preferably less than 10mm² or even more preferably equal or less than 5mm²), (b) at the second lubrication station 91, a second outlet open element (522) along the third guiding face element (51) with an open surface of less than 100 mm² (such as less than 75mm², less than 50mm², less than 25mm², such as less 15mm², preferably less than 10mm² or even more preferably equal or less than 5mm²), said second outlet open element (522) being distant from the first outlet open element (521) by an at least partly curved path distance of at least 10cm, (c) at the third lubrication station 92, a third outlet open element (523) along the third guiding face element (51) with an open surface of less than 100 mm² (such as less than 75mm², less than 50mm², less than 25mm², such as less 15mm², preferably less than 10mm² or even more preferably equal or less than 5mm²), said third outlet open element (523) being distant from the second outlet open element (522) by an at least partly curved path distance of at least 10cm, (d) at the fourth lubrication station 93, a fourth outlet open element (524) along the third guiding face element (41) with an open surface of less than 100 mm² (such as less than 75mm², less than 50mm², less than 25mm², such as less 15mm², preferably less than 10mm² or even more preferably equal or less than 5mm²), said fourth outlet open element (524) being distant from the third outlet open element (523) by an at least partly curved path distance of at least 10cm, (e) at the fifth lubrication station 94 (outlet station), a fifth outlet open element (525) along the third guiding face element (51) with an open surface of less than 100 mm² (such as less than 75mm², less than 50mm², less than 25mm², such as less 15mm², preferably less than 10mm² or even more preferably equal or less than 5mm²), said fifth outlet open element (525) being distant from the fourth outlet open element (524) by an at least partly curved path distance of at least 10cm, and (f) a supply connecting system (566) connecting each of the first outlet open element (521), the second outlet open element (522), the third outlet open element (523), the fourth outlet open element (524) and fifth outlet open element 525 of each elongated tube 501,502 to a connector (527) (see fig 15) adapted to be connected to a lubricant supply (100,110,120) for supplying said first outlet open element (521), said second outlet open element (522), said third outlet open element (523), said fourth outlet open element (524) and said fifth outlet open element (525) of each elongated tube (501,502) of the third lubricating means (52) with the fluid lubricant (when required);
- a fourth lubricating means (62) adapted for ensuring a dry lubrication of at least a portion of the elongated tubes 601,602 of the fouth guiding element (60) by supplying the fluid lubricant along the fourth guiding face element (61), whereby for each elongated tubes 601,602, the fourth lubricating means (62) has at least (a) at the first lubrication inlet station (90), a first outlet open element (621) along the the fourth guiding face element (61) with an open outer surface of less than 100mm² (such as less than 75mm², less than 50mm², less than 25mm², such as less 15mm², preferably less than 10mm² or even more preferably equal or less than 5mm²), (b) at the second lubrication station 91, a second outlet open element (622) along the fourth guiding face element (61) with an open surface of less than 100 mm² (such as less than 75mm², less than 50mm², less than 25mm², such as less 15mm², preferably less than 10mm² or even more preferably equal or less than 5mm²), said second outlet open element (622) being distant from the first outlet open element (621) by an at least partly curved path distance of at least 10cm, (c) at the third lubrication station 92, a third outlet open element (623) along the fourth guiding face element (61) with an open surface of less than 100 mm² (such as less than 75mm², less than 50mm², less than 25mm², such as less 15mm², preferably less than 10mm² or even more preferably equal or less than 5mm²), said third outlet open element (623) being distant from the second outlet open element (622) by an at least partly curved path distance of at least 10cm, (d) at the fourth lubrication station 93, a fourth outlet open element (624) along the fourth guiding face element (61) with an open surface of less than 100 mm² (such as less than 75mm², less than 50mm², less than 25mm², such as less 15mm², preferably less than 10mm² or even more preferably equal or less than 5mm²), said fourth outlet open element (624) being distant from the third outlet open element (623) by an at least partly curved path distance of at least 10cm, (e) at the fifth lubrication station 94 (outlet station), a fifth outlet open element (625) along the fourth guiding face element (61) with an open surface of less than 100 mm² (such as less than 75mm², less than 50mm², less than 25mm², such as less 15mm², preferably less than 10mm² or even more preferably equal or less than 5mm²), said fifth outlet open element (625) being distant from the fourth outlet open element (624) by an at least partly curved path distance of at least 10cm, and (f) a supply connecting system (666) connecting each of the first outlet open element (621), the second outlet open element (622), the third outlet open element (623), the fourth outlet open element (624) and fifth outlet open element 625 of each elongated tube 601,602 to a connector (627) (see fig 15) adapted to be connected to a lubricant supply (100,110,120,130,140) for supplying said first outlet open element (621), said second outlet open element (622), said third outlet open element (623), said fourth outlet open element (624) and said fifth outlet open element (625) of each elongated tube 601,602 of the fourth lubricating means (62) with the fluid lubricant (when required).

The lubricant is supplied to the outlet open elements at very low rate, such as per outlet open element, for example from 50 to 200 mm³ of lubricant per hour. Possible lubricant is for example DLT-333, a food grade white mineral oil with PTFE and wax. The liquid lubricant is preferably substantially water free, and has a low viscosity at 20°C. The liquid lubricant is advantageously supplied step by step, for example microdoses of lubricant are supplied at specific moments, while stopping the supply of liquid lubricant between two successive supply steps of lubricant,

When supplying lubricant to the outlet open elements, the outlet open elements are advantageously located along a face portion directed at least partly upwardly, preferably only upwardly, or at least partly vertically or substantially vertically, so as to prevent as much as possible gravity flow of lubricant from the outlet open elements. For example,in lubricant station 91, 92 and 93 no lubricant or a reduced quantity of lubricant is supplied to the outlet open elements of elongated tubes 401,402 and 602 for preventing a gravity flow.

Figure 14 shows an outlet open element (such 321,421,521,621, etc. for tube portion 800 of guiding rod 301,401,501,601) extending along a substantially curved face portion 800 whereby ensuring a substantially punctual contact surface with the lateral face 203 of the can or bottle of Fig 2 or 2A. The outlet open element is associated to groove system G along said curved face 800. The guiding element portion 800 is for example a portion of a tube with a wall thickness of about 2mm, said tube 800 having for example an outer diameter of 10 to 16mm. The tube is for example heat torsaded for giving the required curvature. The groove G is shaped with two parts G1,G2 (with rounded ends) formed partly in the thickness of the elongated tube 301,401, etc. For example the depth of the groove parts G1,G2 is of 0.5 to 1mm (with respect to a thickness of the tube wall of about 2 mm) The groove parts G1,G2 forms extensions with respect to the central opening connected to the connector 327, 427, etc. intended to be connected to a lubricant supply 100, 110, 120, etc. The groove parts G1,G2 have each a length of about 10mm and an average width of about 2mm, meaning an open surface (at the level of the outer face of the tube) for the outlet open element of about 40 to 50mm². The edges of the groove along the curved face of the tube are rounded so as to avoid that the edge of the grooves can damage the lateral face of the cans or bottles while twisting.

The grooves G1,G2 form a reservoir for the liquid lubricant and are quite useful for ensuring a lubrication along a curved path portion of the tube guiding element 301,302,401, etc.

As shown in Fig 15, the twisting tube 301,401, etc. is provided with a hole 801 for enabling the insertion of a connecting tube 802 into the inner chamber of the twisting tube 301,401, etc., so as to form a connection with the outlet open element 321, 421, etc. along the curved face portion 800 of the twisting tube. The lubricant supply tube 802 inserted into the twisting tube portion is associated to sealing means 802S and 802T. The supply tube 802 is attached to the screwed hole 801 of the twisting tube portion 800 by means of a ring 802R provided with a flange 802R1. The ring 802R has an end face 802RE contacting a flange 802F. The ring 802R is provided with a screw lateral face adapted to screwed into the screwed hole 801. By the screwing of the ring 802R, the lubricant supply tube 802 is moved towards the outlet 321,421, etc. as the ring 802R is abuting against the flange 802F. Due to said movement, the sealing members 802S and 802T are compressed, ensuring correct sealing.

The supply tube 802 is part of the supply connecting system (366,466, etc.) provided with the connector 327,427, etc. adapted for connection to a lubricant supply.

The tube 802 is associated to a valve 900 with control mechanism, adapted to control the supply of lubricant in function of instructions from the central control system 1000.

As the sealing of the inner volume 800I of the twisting tube 800 with respect to the lubricant supply tube 802 and the outside is ensured, the twisting tube 800 and its inner volume can be used for the flow of a coolant medium or fluid from a coolant supply means 200 ( as any leaking of possible liquid cooling medium flowing within the inner volume of the twisting tube is prevented). The flowing of liquid coolant within the tube is interesting for reducing the heating of the tube due to the contact thereof with the moving containers, as well for ensuring the lubricant not to be overheated or to be be undercooled.

The supply connecting system 366, 466, etc. is also provided with an independent valve system 900 which can be controlled for supplying a determined quantity of lubricant at different moments, such as once or twice distinct moments per hour.

The end of the lubricant supply tube 802 is provided with a injector head 802A with a central opening with a diameter of about 1mm, so as to control the flow of the liquid lubricant within the grooves G1, G2.

Fig 15A and 15B are cross section views of the tube portion 800 of Fig 15 respectively along the line XVA-XVA, and the line XVB-XVB.

As it can be seen, the depth of the groove G1 (also G2) decreases from a maximum depth at the injector head 802A, while the outer edges G1R of the groove G1 are rounded. G2 is similar to G1.

At the different lubrication stations, the tube portions can be rectilinear or not.

The straight portions of the the tube in lubrication stations ensure that at least at the various lubrication stations, a portion of the lateral face, the bottom face and/or top face of the moving container or can contacts the curved outer face of the tube along different small linear zones or punctual like surfaces of the containers or cans. The application of some lubricant on the said contact zone of the container will ensure some deposit of liquid lubricant on the tube portion extending between two lubricant stations, for example located at a distance of 30 to 50cm the one from another.

In the embodiment of figure 1, the lubricant stations are adapted so that at the place of the lubrication stations 90,91,92,93,94, the movement of the moving containers is substantially free of any pivotment, i.e. a substantially linear movement so as to ease a control of a good lubrication of a portion of small portions of containers, whereby said lubricated portions of the lubricated containers will lubricated the curved tube portions between the lubrication stations. The lubrication stations define then substantially linear path portions (with a length of less than 5cm, for example) (3B) , (3C), with inbetween curved path section 3D.

The elongated tube can also been shaped so as to ensure at least a contact line between the tube and the moving container along all the moving path. For example, before being partly curved, the elongated tube can be shaped so as to develop an outer substantially longitudinal curved face or an outer face following a thread, said thread when curved ensuring a substantially punctual contact with the cylindrical face of the containers or cans. In case the container is a box, the contact area will be a surface.

Instead of using a tube, it is also possible to use a rod. However, when using a rod, it is not possible to use the elongated tube for cooling the twisting device.

When using elongated tubes 301, 401, etc., it is possible to connect said tube to a cooling system 200, for enabling the flow of a cooling medium in the said tubes. For having a control of said cooling, as well as for determining when time to time lubrication steps have to be operated at one or more outlet open elements of one or more lubrication stations, the twisting device is provided with temperature sensors 901, for example for determining at each of the lubrication stations the temperature for each tube portions in the lubrication station considered.

The central control System 1000 receives signals from the different temperature sensors 901, as well information about the flow rate of containers to be twisted per hours or minutes. In order to keep the temperature of the tubes within an acceptable range, the control system determines the flow of cooling liquid to flow within each tube. A signal is then sent to the cooling control system for supplying cooling liquid to each tube.

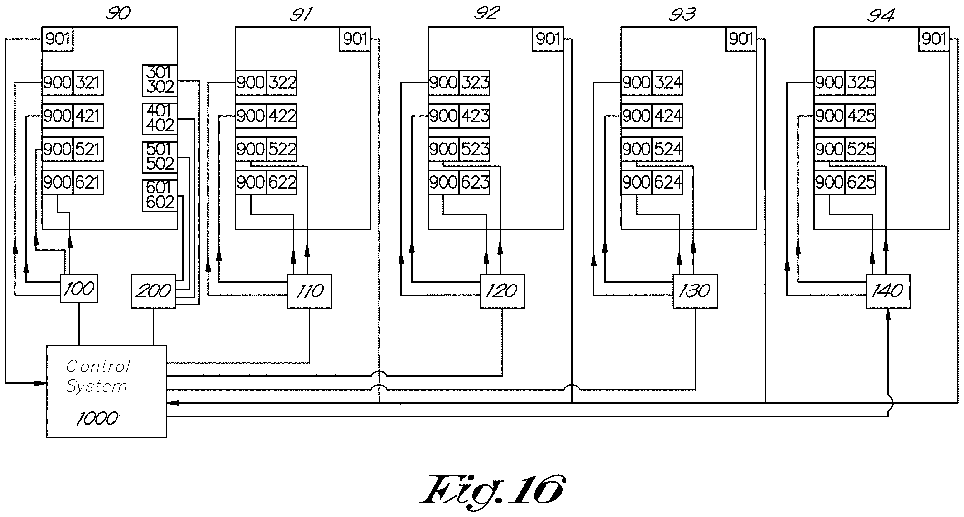

When the temperature of a tube is above a specific range, or when the flow of twisted container is below a specific range, the control system 1000 determines the implementation of one or more lubrication steps, said lubrication steps being operated by supplying intermittently microdose of lubricant to one or more outlet open elements. The control system controls the opening and closing of the control valve for each outlet open element, whereby enabling different lubrication steps or non lubrication step for one or more outlet open elements, and this independently the one from the other, (see figure 16)

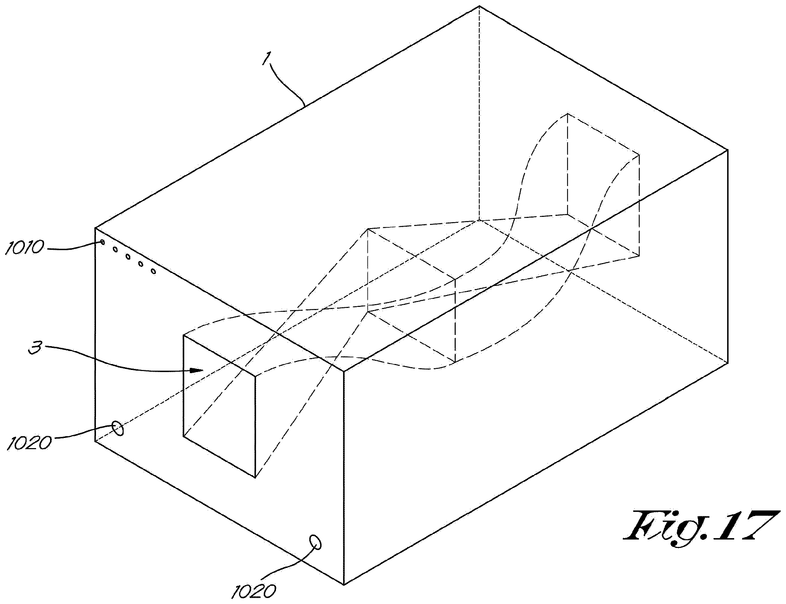

Figure 17 is a twisting device 1 shaped as a box, which can be printed in 3D, so that the inner contacting faces of the box forming the twisting channel 3 is provided with a series of outlet open elements for supplying lubricant to one or more of said faces. The outlet open elements are connected to inner piping system formed during the 3D printing. The ends 1010 of said series of piping systems can then be connected to distinct lubricant supply pipes or to a central supply control system, so as to enable independent lubricant supply to each outlet open element. The box 1 is also advantageously provided with one or more inner channels 1020 to be connected to a cooling system, for ensuring the cooling of the box, and the inner faces of the channel in contact with the containers to be twisted.

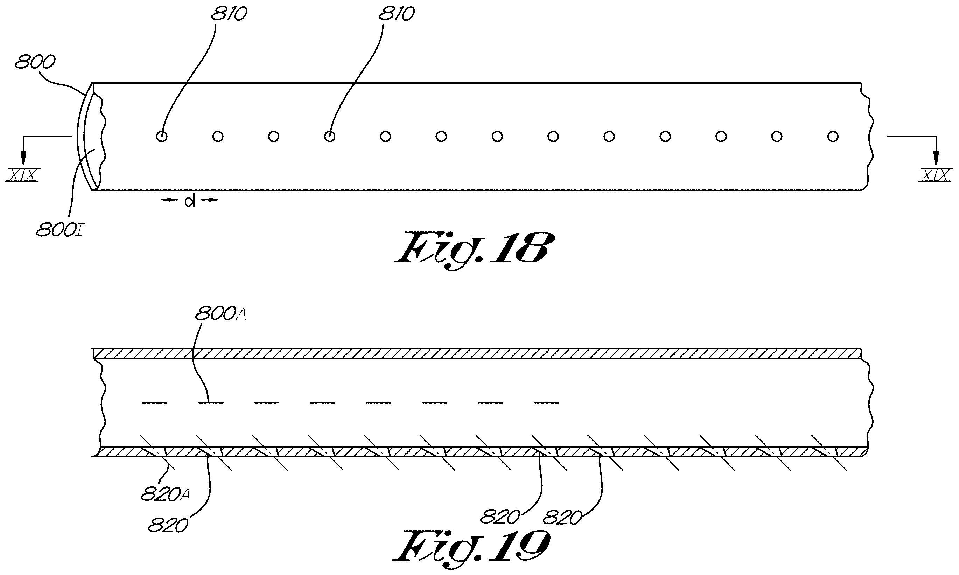

Figure 18 is view of a twisting tube portion 800, before being torsaded for being able to generate a twisting movement, for forming a guiding element of a twisting device of the invention. The tube 800 is thus represented as linear in Fig 18.

Fig 19 is a cross-section view of the tube portion 800 of Fig 18, along the lines XIX-XIX.

The tube portion 800 of figure 18 is indended to be connected to an air supply (compressed air, with an air pressure within the tube of about 3 × 10⁵ Pa upto 10 × 10⁵ Pa).

Air is supplied within the tube (inner volume 800I) substantially in a continuous way, so as to generate various different air flows along the whole length of the tube.

The tube 800 is provided with a series of outlet openings 810 for the escape of air from the tube. The outer diameter of openings is for example equal to or less than 1mm. The outlet openings are spaced the one from the other by an axial distance (d) of about 2cm, substantially along all the length of the tube 800 (length of 100 to 200cm, for example).

The outer outlet openings 810 are the ends of holes 820 in the thickness of the tube 800, said holes 820 having each a frustoconical like shape with a central axis 820A forming an angle with the axial direction 800A of the tube 800. As it can be seen the outlet openings 810 are located along a substantially straight line, which will become a helix like path after being torsaded.

By adapting the diameter of the outlet openings 810 and the angular position of the central axis 820A with respect to the axial direction (800A) of the tube 800, it is possible after torsading the tube 800 for forming a at least partly curved guiding element, to direct the successive air flows towards a face of the moving containers or cans, so as push the containers and cans in their general movement direction and in their general twisting direction. The successive air impulses on the surface of the cans or containers are further helping the movement of the cans and containers within the twisting device.

The invention relates also to a lubrication station as disclosed here above for a twisting device of the invention or for a existing twisting device.

## Claims

1. Device (1) for twisting containers (2) while moving said containers along a moving path (3) comprising an at least partly curved path portion (3A) with an at least partly curved length path comprised between 30cm and 500cm for ensuring that each container (2) moving through the said at least partly curved path portion (3A) follows at least a curved movement, said containers (2) having at least an outer facing system (20), said at least partly curved path portion (3A) extending between an inlet (4) for the containers into the at least partly curved path portion (3A) and an outlet (5) for containers (2) after moving through the at least partly curved path portion (3A), whereby between said inlet (4) and outlet (5), the at least partly curved path portion (3A) comprises at least :
- a support (10) ;
- a first guiding element (30) attached to said support (10), said first guiding element (30) having at least a first guiding face element (31) adapted for contacting at least a first portion of an outer facing system (20) of the containers (2) moving in the at least partly curved path portion (3A);
- a second guiding element (40) attached to said support (10), said second guiding element (40) having at least a second guiding face element (41) distant from the first guiding face element (31) and adapted for contacting at least a second portion of the outer facing system (20) of the containers (2) moving in the at least partly curved path portion (3A), said second portion of the outer facing system (20) of the containers being different from the first portion of the outer facing system (20) of the containers (2);
- a first lubricating means (32) adapted for ensuring a dry lubrication of at least a portion of the first guiding element (30) by supplying a fluid lubricant selected from the group consisting of liquid lubricant, gazeous lubricant and mixtures thereof, along the first guiding face element (31), whereby the first lubricating means (32) has at least (a) a first outlet open element (321) along the the first guiding face element (31) with an outer open surface of less than 100mm², (b) a second outlet open element (322) along the first guiding face element (31) with an outer open surface of less than 100 mm², said second outlet open element (322) being distant from the first outlet open element (321) by an at least partly curved path distance of at least 10cm, and (c) a supply connecting system (366) connecting the first outlet open element (321) and the second outlet open element (322) to a connector (327) adapted to be connected to a lubricant supply (100) for supplying said first outlet open element (321) and said second outlet open element (322) of the first lubricating means (32) with the fluid lubricant; and
- a second lubricating means (42) adapted for ensuring a dry lubrication of at least a portion of the second guiding element (40) by supplying the fluid lubricant along the second guiding face element (41), whereby the second lubricating means (42) has at least (a) a first outlet open element (421) along the the second guiding face element (41) with an open outer surface of less than 100mm², (b) a second outlet open element (422) along the second guiding face element (41) with an open surface of less than 100 mm², said second outlet open element (422) of the second lubricating means (42) being distant from the first outlet open element (421) of the second lubricating means (42) by a at least partly curved path distance of at least 10cm, and (c) a supply connecting system (466) connecting the first outlet open element (421) and the second outlet open element (422) of the second lubricating means (42) to a connector (427) adapted to be connected to a or the lubricant supply (100,110) for supplying said first outlet open element (421) and said second outlet open element (422) of the second lubricating means (42) with the fluid lubricant,
in which advantageously at least one of the first outlet open element (321) and the second outlet open element (322) of the first lubricating means (32) and at least one of the first outlet open element (421) and the second outlet open element (422) of the second lubricating means (42) have an outer form selected from the group consisting of a substantially circular outer form with an outer diameter comprised between 0.5mm and 5mm, a substantially ellipse outer form with an equivalent diameter comprised between 0.5mm and 5mm, an elongated outer form with an average width comprised between 0.5mm and 5mm and an average length greater than the average width, but comprised between 3mm and 50mm, and combinations of parts thereof.

2. The device of claim 1, in which at least one of the first outlet open element (321) and the second outlet open element (322) of the first lubricating means (32) and at least one of the first outlet open element (421) and the second outlet open element (422) of the second lubricating means (42) have the form of a groove (G) with an average width comprised between 0.5mm and 5mm and an average length (L) greater than the average width and comprised between 3mm and 50mm.

3. The device of claim 1 or 2, in which the first guiding element (30) comprises at least two first guiding face elements distant from each other and selected from the group consisting of at least partly curved rods and at least partly curved elongated elements (301,302), each of said at least two first guiding face elements (301,302) of the first guiding element (30) when defolded in a substantially straight shape having a substantialy curved contact face defining a linear contact face adapted to contact substantially continuously a portion of an outer facing system (20) of the container (2) when moving in the device, said linear contact face having a a width of less than 0.5 mm, while the second guiding element (40) comprises at least two second guiding face elements distant from each other and selected from the group consisting of at least partly curved rods and at least partly curved elongated elements (401,402), each of said at least two second guiding face elements (401,402) of the second guiding element (40) when defolded in a substantially straight shape having a substantialy curved contact face defining a linear contact face adapted to contact substantially continuously a portion of an outer facing system (20) of the container (2) when moving in the device, said linear contact face having a a width of less than 0.5 mm.

4. The device of claim 3, in which the curved rods or the curved elongated elements (301,302; 401,402) of the first guiding face element (31) and/or of the second guiding face element (41) are each provided with at least a first passage or channel ending into a first outlet open element (321,421) and a second passage or channel ending into a second outlet open element (322,422) of the first lubricating means (32) or the second lubricating means (42), whereby with respect to the said curved rods or curved elongated elements (301,302; 401,402) when defolded in straigth shape, the said first outlet open element (321,421) and the said second outlet open element (322, 422) of each curved rod or curved elongated element (301,302;401,402) extend along a substantially linear curved contact face of the curved rod or curved elongated element (301,302;401,402) taken into consideration with a width of less than 0.5mm, said first outlet open element (321,421) and said second outlet open element (322, 422) being distant by a distance of at least 10cm.

5. The device of any one of the claims 1 to 4, further comprising:
- a third guiding element (50) attached to said support (10), said third guiding element (50) having at least a third guiding face element (51) adapted for contacting at least a portion of the bottom face (201) of the containers (2) moving in the at least partly curved path portion (3A); and
- a third lubricating means (52) adapted for ensuring a dry lubrication of at least a portion of the third guiding element (50) by supplying the fluid supplying the fluid lubricant along the third guiding face element (51), whereby the third lubricating means (52) has at least (a) a first outlet open element (521) along the third guiding face element (51) with an open outer surface of less than 100mm², (b) a second outlet open element (522) along the third guiding face element (51) with an open surface of less than 100 mm², said second outlet open element (522) being distant from the first outlet open element (521) by an at least partly curved path distance of at least 10cm, and (c) a supply connecting system (566) connecting the first outlet open element (521) and the second outlet open element (522) to a connector (527) adapted to be connected to a or the lubricant supply (100, 110, 120) for supplying said first outlet open element (521) and said second outlet open element (522) of the third lubricating means (52) with the fluid lubricant,
in which advantageously, at least one of the first and second outlet open elements (521,522) of the third lubricating means (52) have the form of a groove (G) with an average width comprised between 0.5mm and 5mm and an average length (L) greater than the average width and comprised between 3mm and 50mm.

6. The device of claim 5, further comprising:
- a fourth guiding element (60) attached to said support (10), said fourth guiding element (60) having at least a fourth guiding face element (61) adapted for contacting at least a second portion of the top face (202) of the containers (2) moving in the at least partly curved path portion (3A); and
- a fourth lubricating means (62) adapted for ensuring a dry lubrication of at least a portion of the fourth guiding element (60) by supplying the fluid lubricant along the fourth guiding face element (61), whereby the fourth lubricating means (62) has (a) a first outlet open element (621) along the the fourth guiding face with an open outer surface of less than 100mm², (b) a second outlet open element (622) along the fourth guiding face element (61) with an open surface of less than 100 mm², said second outlet open element (622) being distant from the first outlet open element (621) by a curved path distance of at least 10cm, and (c) a supply connecting system (666) connecting the first outlet open element (621) and the second outlet open element (622) to a connector (627) adapted to be connected to a or the lubricant supply (100,110,120,130) for supplying said first outlet open element (621) and said second outlet open element (622) of the fourth lubricating means (62) with the fluid lubricant,
in which, advantageously, at least one of the first and second opening outlets (621,622) of the fourth lubricating means (62) have the form of a groove (G) with an average width comprised between 0.5mm and 5mm and an average length (L) greater than the average width and comprised between 3mm and 50mm.

7. The device of claims 5 and 6, in which the first guiding face element (31) of the first guiding element (30) defines an at least partly curved surface (303) contacting substantially continuously a portion of the lateral facing system (203) selected from the group consisting of a linear zone with a width of less than 0.5cm and a surface zone of less than 5mm² of the lateral facing system (203),
in which the second guiding face element (41) of the second guiding element (40) defines a curved surface contacting substantially continuously a portion of the lateral facing system (203) selected from the group consisting of a linear zone with a width of less than 0.5cm and a surface zone of less than 5mm² of the lateral facing system (203),
in which the third guiding face element (51) of the third guiding element (50) defines a curved surface contacting susbstantially continuously at least one portion of the bottom face (201) of the container (2) selected from the group consisting of a linear zone with a width of less than 0.5cm and a surface zone of less than 5mm² of the bottom face (201), and
in which the fourth guiding face element (61) of the fourth guiding element (60) defines a curved surface contacting susbstantially continuously at least one portion of the top face (202) of the container (2) selected from the group consisting of a linear zone with a width of less than 0.5cm and a surface zone of less than 5mm² of the top face (202),
in which advantageously, at least one of the first and second outlet open elements (321,322) of the first lubricating means (32), at least one of the first and second outlet open elements (421,422) of the second lubricating means (42), at least one of the first and second outlet open elements (521,522) of the third lubricating means (52), and at least one the first and second outlet open elements (621,622) of the fourth lubricating means (62), preferably all of said first and second outlet open elements (321,421,521,621,322,422,522,622) have the form of a groove (G) with an average width comprised between 0.5mm and 5mm and an average length (L) greater than the average width and comprised between 3mm and 50mm.

8. The device of anyone of the preceding claims, in which the first lubricating means (32) is adapted for ensuring a dry lubrication of at least a portion of the first guiding element (30) by supplying the fluid lubricant along the first guiding face element (31), whereby the first lubricating means (32) has at least (a) a first outlet open element (321) along the the first guiding face element (31) with an open outer surface of less than 100mm², (b) a second outlet open element (322) along the first guiding face element (31) with an open surface of less than 100 mm², said second outlet open element being distant from the first outlet open element by an at least partly curved path distance of at least 50cm, (c) a third outlet open element (323) along the first guiding face element (31) with an open surface of less than 100 mm², said third outlet open element being distant from the first outlet open element (321) by an at least partly curved path distance of at least 100cm and from the second outlet open element (322) by a distance of at least 50cm, and (d) a supply connecting system (366) connecting the first outlet open element (321), the second outlet open element (322) and the third outlet open element (323) to at least a connector (327) adapted to be connected to a lubricant supply (100) for supplying said first outlet open element (321), said second outlet open element (322) and said third outlet open element (323) of the first lubricating means (32) with the fluid lubricant; and
in which the second lubricating means (42) is adapted for ensuring a dry lubrication of at least a portion of the second guiding element (40) by supplying the fluid lubricant along the second guiding face element (41), whereby the second lubricating means (42) has at least (a) a first outlet open element (421) along the the first guiding face element (41) with an open outer surface of less than 100mm², (b) a second outlet open element (422) along the first guiding face element (41) with an open surface of less than 100 mm², said second outlet open element (422) being distant from the first outlet open element by an at least partly curved path distance of at least 50cm, (c) a third outlet open element (423) along the second guiding face element (41) with an open surface of less than 100 mm², said third outlet open element (423) being distant from the first outlet open element (421) by an at least partly curved path distance of at least 100cm and from the second outlet open element (422) by a distance of at least 50cm, and (d) a supply connecting system (466) connecting the first outlet open element (421), the second outlet open element (422) and the third outlet open element (423) to at least a connector (427) adapted to be connected to a or the lubricant supply (100,110) for supplying said first outlet open element (421), said second outlet open element (422) and said third outlet open element (423) of the second lubricating means with the fluid lubricant,
in which, advantageously, at least for the first and second lubricating means (32,42), each of the first outlet open element (321,421) and the second outlet open element (322,422), or the supply connecting systems (366,466) thereof is associated with a distinct means (900) for controlling the supply of lubricant.

9. The device of anyone of the preceding claims, which comprises a centralised supply system (1000,100,110,120,130,140) adapted for controlling the supply of lubricant under pressure at least to the first lubricating means (32) and to the second lubricating means (42), as well as advantageously at least to one of the third lubricating means (52) and/or fourth lubricating means (62).

10. The device of anyone of the preceding claims, which comprises a guiding box (200) provided with at least the first guiding element (30) and the second guiding element (40), and possibly the third and/or fourth guiding elements (50,60).

11. The device of any one of the preceding claims, in which the moving path (3) comprising the at least partly curved path portion or portions (3A) with an at partly curved length path comprised between 30cm and 500cm comprises at least a first substantially linear path portion (3B) and a second substantially linear path portion (3C) distant from the first substantially linear path portion (3B), whereby a curved path portion (3D) is located between the said first substantially linear path portion (3B) and the said second substantially linear path portion (3C), and whereby the first outlet open element (321) of the first lubricating means (32) and the first outlet open element (421) of the second lubricating means (42) are located in the first substantially linear path portion (3B) for ensuring a dry lubrication of respectively at least a substantially linear portion of the first guiding element (30) and at least a substantially linear portion of the second guiding element (40),
in which, advantageously, the first outlet open element (521) of the third lubricating means (52) and/or the first outlet open element (621) of the fourth lubricating means (62) is/are located in the first substantially linear path portion (3B) of the moving path (3) for ensuring a dry lubrication of respectively at least a substantially linear portion of the third guiding element (50) and/or at least a substantially linear portion of the fourth guiding element (60),
while preferably the second outlet open element (322) of the first lubricating means (32) and the second outlet open element (422) of the second lubricating means (42) are located in the second substantially linear path portion (42) for ensuring a dry lubrication of respectively at least a substantially linear portion of the first guiding element (30) and a substantially linear portion of the second guiding element (40).

12. The device of any one of the preceding claims, in which at least one guiding element selected from the group consisting of the first guiding element (30), the second guiding element (40), the third guiding element (50), and the fourth guiding element (60) before being at least partly curved or after development as an linear element has substantially the shape of a rod or tube provided with a series of lateral openings placed along a helix .

13. The device of any one of the preceding claims, in which at least one guiding element selected from the group consisting of the first guiding element (30), the second guiding element (40), the third guiding element (50), and the fourth guiding element (60) has substantially the shape of a rod or tube provided with at least two substantially linear portions separated by a curved path portion.

14. The device of any one of the preceding claims, in which at least one guiding element selected from the group consisting of the first guiding element (30), the second guiding element(40), the third guiding element (50), and the fourth guiding element (60) is shaped so as to define at each moment of the twisting of a container, a linear contact zone between the outer surface of the container and the at least one guiding element with a length of less than 0.5cm and a surface contact zone between the outer surface of the container and the at least one guiding element of less than 5mm² with a face of the container moving along the one considered guiding element,
in which, advantageously, at least one guiding element selected from the group consisting of the first guiding element (30), the second guiding element (40), the third guiding element (50), and the fourth guiding element (60) comprises at least two elongated distinct element portions or parts, which are each shaped so as to define at each moment of the twisting of a container, a linear contact zone between the outer surface of the container and an elongated distinct guiding element of said at least one guiding element with a length of less than 0.5cm and a surface contact zone between the outer surface of the container and an elongated distinct guiding element of said at least one guiding element of less than 5mm² .

15. The device of anyone of the preceding claims, in which at least one guiding element selected from the group consisting of the first guiding element (30), the second guiding element (40), the third guiding element (50), and the fourth guiding element (60) is provided with a cooling system, said cooling system being advantageously in the form of a tube or channel adapted to be connected to a coolant supply means (200).

16. The device of anyone of the preceding claims, in which at least one guiding element selected from the group consisting of the first guiding element (30), the second guiding element (40), the third guiding element (50), and the fourth guiding element (60) is provided or associated to a temperature sensor (201), while advantageously, the device is further associated to a control system receiving one or more information or signals from one or more sensors, for controlling lubrication steps and/or for controlling a cooling step and/or for controlling a conveyor speed.

17. The device of anyone of the preceding claims for moving containers following a central moving direction parallel to a central twisting axis, in which at least a gazeous lubricant under pressure is used as the fluid lubricant for at least a portion of a guiding face tube element selected from the group consisting of the first guiding face element, the second guiding face element, the third guiding face element and the fourth guiding face element, in which the said portion of the guiding face tube element is provided with a series of injector openings distant the one from the other by a distance of less than 5cm, said injector openings being adapted for expelling the gazeous lubricant along a central direction having at least a direction composant parallel to the central moving direction,
in which advantageously, at least some injector openings are adapted for directing a flow of gazeous lubricant in order to ease the twisting of containers.

18. An conveyor for moving containers (2) along a moving path (3A), said conveyor comprising at least a device of any one of the preceding claims 1 to 17.

19. The use of a twisting device according to any one of the claims 1 to 17, for ensuring a twisting of containers while moving along the twisting device,
in which, advantageously, the temperature of the at least one guiding element (30,40,50,60) is measured for controlling a cooling of at least one guiding element (30,40,50,60), and/or for controlling the supply of lubricant to the said at least one guiding element (30,40,50,60).

## Patentansprüche

1. Vorrichtung (1) zum Verdrehen von Behältern (2), während die genannten Behälter entlang eines Bewegungswegs (3) bewegt werden, umfassend einen mindestens teilweise gekrümmten Wegabschnitt (3A) mit einem Weg mit mindestens teilweise gekrümmter Länge zwischen 30 cm und 500 cm, um sicherzustellen, dass jeder Behälter (2), der sich durch den genannten mindestens teilweise gekrümmten Wegabschnitt (3A) bewegt, mindestens einer gekrümmten Bewegung folgt, wobei die genannten Behälter (2) mindestens ein äußeres Verkleidungssystem (20) aufweisen, wobei sich der genannte mindestens teilweise gekrümmte Wegabschnitt (3A) zwischen einem Einlass (4) für die Behälter in den mindestens teilweise gekrümmten Wegabschnitt (3A) und einem Auslass (5) für Behälter (2), nachdem sie sich durch den mindestens teilweise gekrümmten Wegabschnitt (3A) bewegt haben, erstreckt, wodurch zwischen dem genannten Einlass (4) und Auslass (5) der mindestens teilweise gekrümmte Wegabschnitt (3A) mindestens umfasst:
- einen Träger (10);
- ein erstes Führungselement (30), das an dem genannten Träger (10) angebracht ist, wobei das genannte erste Führungselement (30) mindestens ein erstes Führungsflächenelement (31) aufweist, das geeignet ist, um mit mindestens einem ersten Abschnitt eines äußeren Verkleidungssystems (20) der Behälter (2) in Kontakt zu gelangen, die sich in dem mindestens teilweise gekrümmten Wegabschnitt (3A) bewegen;
- ein zweites Führungselement (40), das an dem genannten Träger (10) angebracht ist, wobei das genannte zweite Führungselement (40) mindestens ein zweites Führungsflächenelement (41) aufweist, das von dem ersten Führungsflächenelement (31) entfernt ist und geeignet ist, um mit mindestens einem zweiten Abschnitt des äußeren Verkleidungssystems (20) der Behälter (2) in Kontakt zu gelangen, die sich in dem mindestens teilweise gekrümmten Wegabschnitt (3A) bewegen, wobei der genannte zweite Abschnitt des äußeren Verkleidungssystems (20) der Behälter von dem ersten Abschnitt des äußeren Verkleidungssystems (20) der Behälter (2) verschieden ist;
- eine erste Schmiereinrichtung (32), die geeignet ist, um eine Trockenschmierung mindestens eines Abschnitts des ersten Führungselements (30) sicherzustellen, indem ein fluides Schmiermittel, das ausgewählt ist aus der Gruppe bestehend aus flüssigem Schmiermittel, gasförmigem Schmiermittel und Mischungen davon, entlang des ersten Führungsflächenelements (31) zugeführt wird, wodurch die erste Schmiereinrichtung (32) mindestens aufweist: (a) ein erstes offenes Auslasselement (321) entlang des ersten Führungsflächenelements (31) mit einer äußeren offenen Fläche von weniger als 100 mm², (b) ein zweites offenes Auslasselement (322) entlang des ersten Führungsflächenelements (31) mit einer äußeren offenen Fläche von weniger als 100 mm², wobei das genannte zweite offene Auslasselement (322) von dem ersten offenen Auslasselement (321) durch eine mindestens teilweise gekrümmte Wegdistanz von mindestens 10 cm entfernt ist, und (c) ein Zufuhrverbindungssystem (366), welches das erste offene Auslasselement (321) und das zweite offene Auslasselement (322) mit einem Anschluss (327) verbindet, der geeignet ist, um mit einer Schmiermittelzufuhr (100) verbunden zu werden, um dem genannten ersten offenen Auslasselement (321) und dem genannten zweiten offenen Auslasselement (322) der ersten Schmiereinrichtung (32) das fluide Schmiermittel zuzuführen; und
- eine zweite Schmiereinrichtung (42), die geeignet ist, um eine Trockenschmierung mindestens eines Abschnitts des zweiten Führungselements (40) sicherzustellen, indem das fluide Schmiermittel entlang des zweiten Führungsflächenelements (41) zugeführt wird, wodurch die zweite Schmiereinrichtung (42) mindestens aufweist: (a) ein erstes offenes Auslasselement (421) entlang des zweiten Führungsflächenelements (41) mit einer offenen äußeren Fläche von weniger als 100 mm², (b) ein zweites offenes Auslasselement (422) entlang des zweiten Führungsflächenelements (41) mit einer offenen Fläche von weniger als 100 mm², wobei das genannte zweite offene Auslasselement (422) der zweiten Schmiereinrichtung (42) von dem ersten offenen Auslasselement (421) der zweiten Schmiereinrichtung (42) durch eine mindestens teilweise gekrümmte Wegdistanz von mindestens 10 cm entfernt ist, und (c) ein Zufuhrverbindungssystem (466), welches das erste offene Auslasselement (421) und das zweite offene Auslasselement (422) der zweiten Schmiereinrichtung (42) mit einem Anschluss (427) verbindet, der geeignet ist, um mit einer oder der Schmiermittelzufuhr (100, 110) verbunden zu werden, um dem genannten ersten offenen Auslasselement (421) und dem genannten zweiten offenen Auslasselement (422) der zweiten Schmiereinrichtung (42) das fluide Schmiermittel zuzuführen,
wobei vorteilhaft mindestens eines von dem ersten offenen Auslasselement (321) und dem zweiten offenen Auslasselement (322) der ersten Schmiereinrichtung (32) und mindestens eines von dem ersten offenen Auslasselement (421) und dem zweiten offenen Auslasselement (422) der zweiten Schmiereinrichtung (42) eine äußere Form aufweisen, die ausgewählt ist aus der Gruppe bestehend aus einer im Wesentlichen kreisförmigen äußeren Form mit einem Außendurchmesser zwischen 0,5 mm und 5 mm, einer im Wesentlichen elliptischen äußeren Form mit einem äquivalenten Durchmesser zwischen 0,5 mm und 5 mm, einer länglichen äußeren Form mit einer mittleren Breite zwischen 0,5 mm und 5 mm und einer größeren mittleren Länge als der mittleren Breite, jedoch zwischen 3 mm und 50 mm, und Kombinationen von Teilen davon.

2. Vorrichtung nach Anspruch 1, wobei mindestens eines von dem ersten offenen Auslasselement (321) und dem zweiten offenen Auslasselement (322) der ersten Schmiereinrichtung (32) und mindestens eines von dem ersten offenen Auslasselement (421) und dem zweiten offenen Auslasselement (422) der zweiten Schmiereinrichtung (42) die Form einer Rille (G) aufweisen, mit einer mittleren Breite zwischen 0,5 und 5 mm und einer größeren mittleren Länge (L) als der mittleren Breite und zwischen 3 mm und 50 mm.

3. Vorrichtung nach Anspruch 1 oder 2, wobei das erste Führungselement (30) mindestens zwei erste Führungsflächenelemente aufweist, die voneinander entfernt sind und ausgewählt sind aus der Gruppe bestehend aus mindestens teilweise gekrümmten Stäben und mindestens teilweise gekrümmten länglichen Elementen (301, 302), wobei jedes von den genannten mindestens zwei ersten Führungsflächenelementen (301, 302) des ersten Führungselements (30), wenn sie in einer im Wesentlichen geraden Form aufgefaltet sind, eine im Wesentlichen gekrümmte Kontaktfläche aufweist, welche eine lineare Kontaktfläche definiert, die geeignet ist, um im Wesentlichen kontinuierlich mit einem Abschnitt eines äußeren Verkleidungssystems (20) des Behälters (2) in Kontakt zu stehen, wenn er sich in der Vorrichtung bewegt, wobei die genannte lineare Kontaktfläche eine Breite von weniger als 0,5 mm aufweist, während das zweite Führungselement (40) mindestens zwei zweite Führungsflächenelemente aufweist, die voneinander entfernt sind und ausgewählt sind aus der Gruppe bestehend aus mindestens teilweise gekrümmten Stäben und mindestens teilweise gekrümmten länglichen Elementen (401, 402), wobei jedes von den genannten mindestens zwei zweiten Führungsflächenelementen (401, 402) des zweiten Führungselements (40), wenn sie in einer im Wesentlichen geraden Form aufgefaltet sind, eine im Wesentlichen gekrümmte Kontaktfläche aufweist, welche eine lineare Kontaktfläche definiert, die geeignet ist, um im Wesentlichen kontinuierlich mit einem Abschnitt eines äußeren Verkleidungssystems (20) des Behälters (2) in Kontakt zu stehen, wenn er sich in der Vorrichtung bewegt, wobei die genannte lineare Kontaktfläche eine Breite von weniger als 0,5 mm aufweist.

4. Vorrichtung nach Anspruch 3, wobei die gekrümmten Stäbe oder die gekrümmten länglichen Elemente (301, 302; 401, 402) des ersten Führungsflächenelements (31) und/oder des zweiten Führungsflächenelements (41) jeweils versehen sind mit mindestens einem ersten Durchgang oder Kanal, der in ein erstes offenes Auslasselement (321, 421) endet, und einem zweiten Durchgang oder Kanal, der in ein zweites offenes Auslasselement (322, 422) der ersten Schmiereinrichtung (32) oder der zweiten Schmiereinrichtung (42) endet, wodurch, in Bezug auf die genannten gekrümmten Stäbe oder gekrümmten länglichen Elemente (301, 302; 401, 402), wenn sie in einer geraden Form aufgefaltet sind, sich das genannte erste offene Auslasselement (321, 421) und das genannte zweite offene Auslasselement (322, 422) jedes gekrümmten Stabs oder gekrümmten länglichen Elements (301, 302; 401, 402) entlang einer im Wesentlichen linearen gekrümmten Kontaktfläche des betreffenden gekrümmten Stabs oder gekrümmten länglichen Elements (301, 302; 401, 402) mit einer Breite von weniger als 0,5 mm erstrecken; wobei das genannte erste offene Auslasselement (321, 421) und das genannte zweite offene Auslasselement (322, 422) durch eine Distanz von mindestens 10 cm entfernt sind.

5. Vorrichtung nach einem der Ansprüche 1 bis 4, ferner umfassend:
- ein drittes Führungselement (50), das an dem genannten Träger (10) angebracht ist, wobei das genannte dritte Führungselement (50) mindestens ein drittes Führungsflächenelement (51) aufweist, das geeignet ist, um mit mindestens einem Abschnitt der Bodenfläche (201) der Behälter (2) in Kontakt zu gelangen, die sich in dem mindestens teilweise gekrümmten Wegabschnitt (3A) bewegen; und
- eine dritte Schmiereinrichtung (52), die geeignet ist, um eine Trockenschmierung mindestens eines Abschnitts des dritten Führungselements (50) sicherzustellen, indem das Fluid, welches das fluide Schmiermittel zuführt, entlang des dritten Führungsflächenelements (51) zugeführt wird, wodurch die dritte Schmiereinrichtung (52) mindestens aufweist: (a) ein erstes offenes Auslasselement (521) entlang des dritten Führungsflächenelements (51) mit einer offenen äußeren Fläche von weniger als 100 mm², (b) ein zweites offenes Auslasselement (522) entlang des dritten Führungsflächenelements (51) mit einer offenen Fläche von weniger als 100 mm², wobei das genannte zweite offene Auslasselement (522) von dem ersten offenen Auslasselement (521) durch eine mindestens teilweise gekrümmte Wegdistanz von mindestens 10 cm entfernt ist, und (c) ein Zufuhrverbindungssystem (566), welches das erste offene Auslasselement (521) und das zweite offene Auslasselement (522) mit einem Anschluss (527) verbindet, der geeignet ist, um mit einer oder der Schmiermittelzufuhr (100, 110, 120) verbunden zu werden, um dem genannten ersten offenen Auslasselement (521) und dem genannten zweiten offenen Auslasselement (522) der dritten Schmiereinrichtung (52) das fluide Schmiermittel zuzuführen,
wobei vorteilhaft mindestens eines von dem ersten und zweiten offenen Auslasselement (521, 522) der dritten Schmiereinrichtung (52) die Form einer Rille (G) aufweist, mit einer mittleren Breite zwischen 0,5 mm und 5 mm und einer größeren mittleren Länge (L) als der mittleren Breite, und zwischen 3 mm und 50 mm.

6. Vorrichtung nach Anspruch 5, ferner umfassend:
- ein viertes Führungselement (60), das an dem genannten Träger (10) angebracht ist, wobei das genannte vierte Führungselement (60) mindestens ein viertes Führungsflächenelement (61) aufweist, das geeignet ist, um mit mindestens einem zweiten Abschnitt der oberen Fläche (202) der Behälter (2) in Kontakt zu gelangen, die sich in dem mindestens teilweise gekrümmten Wegabschnitt (3A) bewegen; und
- eine vierte Schmiereinrichtung (62), die geeignet ist, um eine Trockenschmierung mindestens eines Abschnitts des vierten Führungselements (60) sicherzustellen, indem das fluide Schmiermittel entlang des vierten Führungsflächenelements (61) zugeführt wird, wodurch die vierte Schmiereinrichtung (62) mindestens aufweist: (a) ein erstes offenes Auslasselement (621) entlang des vierten Führungsflächenelements mit einer offenen äußeren Fläche von weniger als 100 mm², (b) ein zweites offenes Auslasselement (622) entlang des vierten Führungsflächenelements (61) mit einer offenen Fläche von weniger als 100 mm², wobei das genannte zweite offene Auslasselement (622) von dem ersten offenen Auslasselement (621) durch eine gekrümmte Wegdistanz von mindestens 10 cm entfernt ist, und (c) ein Zufuhrverbindungssystem (666), welches das genannte erste offene Auslasselement (621) und das genannte zweite offene Auslasselement (622) mit einem Anschluss (627) verbindet, der geeignet ist, um mit einer oder der Schmiermittelzufuhr (100, 110, 120, 130) verbunden zu werden, um dem genannten ersten offenen Auslasselement (621) und dem genannten zweiten offenen Auslasselement (622) der vierten Schmiereinrichtung (62) das fluide Schmiermittel zuzuführen,
wobei vorteilhaft mindestens eines von dem ersten und zweiten offenen Auslasselement (621, 622) der vierten Schmiereinrichtung (62) die Form einer Rille (G) aufweist, mit einer mittleren Breite zwischen 0,5 mm und 5 mm und einer größeren mittleren Länge (L) als der mittleren Breite, und zwischen 3 mm und 50 mm.

7. Vorrichtung nach den Ansprüchen 5 und 6, wobei das erste Führungsflächenelement (31) des ersten Führungselements (30) eine mindestens teilweise gekrümmte Fläche (303) definiert, die im Wesentlichen kontinuierlich mit einem Abschnitt des lateralen Verkleidungssystems (203) in Kontakt steht, ausgewählt aus der Gruppe bestehend aus einer linearen Zone mit einer Breite von weniger als 0,5 cm und einer Flächenzone von weniger als 5 mm² des lateralen Verkleidungssystems (203),
wobei das zweite Führungsflächenelement (41) des zweiten Führungselements (40) eine gekrümmte Fläche definiert, die im Wesentlichen kontinuierlich mit mindestens einem Abschnitt des lateralen Verkleidungssystems (203) in Kontakt steht, ausgewählt aus der Gruppe bestehend aus einer linearen Zone mit einer Breite von weniger als 0,5 cm und einer Flächenzone von weniger als 5 mm² des lateralen Verkleidungssystems (203),
wobei das dritte Führungsflächenelement (51) des dritten Führungselements (50) eine gekrümmte Fläche definiert, die im Wesentlichen kontinuierlich mit mindestens einem Abschnitt der Bodenfläche (201) des Behälters (2) in Kontakt steht, ausgewählt aus der Gruppe bestehend aus einer linearen Zone mit einer Breite von weniger als 0,5 cm und einer Flächenzone von weniger als 5 mm² der Bodenfläche (201), und
wobei das vierte Führungsflächenelement (61) des vierten Führungselements (60) eine gekrümmte Fläche definiert, die im Wesentlichen kontinuierlich mit mindestens einem Abschnitt der oberen Fläche (202) des Behälters (2) in Kontakt steht, ausgewählt aus der Gruppe bestehend aus einer linearen Zone mit einer Breite von weniger als 0,5 cm und einer Flächenzone von weniger als 5 mm² der oberen Fläche (202),
wobei vorteilhaft mindestens eines von dem ersten und zweiten offenen Auslasselement (321, 322) der ersten Schmiereinrichtung (32), mindestens eines von dem ersten und zweiten offenen Auslasselement (421, 422) der zweiten Schmiereinrichtung (42), mindestens eines von dem ersten und zweiten offenen Auslasselement (521, 522) der dritten Schmiereinrichtung (52) und mindestens eines von dem ersten und zweiten offenen Auslasselement (621, 622) der vierten Schmiereinrichtung (62), vorzugsweise alle der genannten ersten und zweiten offenen Auslasselemente (321, 421, 521, 621, 322, 422, 522, 622), die Form einer Rille (G) aufweisen, mit einer mittleren Breite zwischen 0,5 und 5 mm und einer größeren mittleren Länge (L) als der mittleren Breite und zwischen 3 mm und 50 mm.

8. Vorrichtung nach einem der vorhergehenden Ansprüche, wobei die erste Schmiereinrichtung (32) geeignet ist, um eine Trockenschmierung mindestens eines Abschnitts des ersten Führungselements (30) sicherzustellen, indem das fluide Schmiermittel entlang des ersten Führungsflächenelements (31) zugeführt wird, wodurch die erste Schmiereinrichtung (32) mindestens aufweist: (a) ein erstes offenes Auslasselement (321) entlang des ersten Führungsflächenelements (31) mit einer offenen äußeren Fläche von weniger als 100 mm², (b) ein zweites offenes Auslasselement (322) entlang des ersten Führungsflächenelements (31) mit einer offenen Fläche von weniger als 100 mm², wobei das genannte zweite offene Auslasselement (322) von dem ersten offenen Auslasselement durch eine mindestens teilweise gekrümmte Wegdistanz von mindestens 50 cm entfernt ist, (c) ein drittes offenes Auslasselement (323) entlang des ersten Führungsflächenelements (31) mit einer offenen Fläche von weniger als 100 mm², wobei das genannte dritte offene Auslasselement von dem ersten offenen Auslasselement (321) durch eine mindestens teilweise gekrümmte Wegdistanz von mindestens 100 cm und von dem zweiten offenen Auslasselement (322) durch eine Distanz von mindestens 50 cm entfernt ist, und (d) ein Zufuhrverbindungssystem (366), welches das erste offene Auslasselement (321), das zweite offene Auslasselement (322) und das dritte offene Auslasselement (323) mit mindestens einem Anschluss (327) verbindet, der geeignet ist, um mit einer Schmiermittelzufuhr (100) verbunden zu werden, um dem genannten ersten offenen Auslasselement (321), dem genannten zweiten offenen Auslasselement (322) und dem genannten dritten offenen Auslasselement (323) der ersten Schmiereinrichtung (32) das fluide Schmiermittel zuzuführen; und
wobei die zweite Schmiereinrichtung (42) geeignet ist, um eine Trockenschmierung mindestens eines Abschnitts des zweiten Führungselements (40) sicherzustellen, indem das fluide Schmiermittel entlang des zweiten Führungsflächenelements (41) zugeführt wird, wodurch die zweite Schmiereinrichtung (42) mindestens aufweist: (a) ein erstes offenes Auslasselement (421) entlang des zweiten Führungsflächenelements (41) mit einer offenen äußeren Fläche von weniger als 100 mm², (b) ein zweites offenes Auslasselement (422) entlang des zweiten Führungsflächenelements (41) mit einer offenen Fläche von weniger als 100 mm², wobei das genannte zweite offene Auslasselement (422) von dem ersten offenen Auslasselement durch eine mindestens teilweise gekrümmte Wegdistanz von mindestens 50 cm entfernt ist, (c) ein drittes offenes Auslasselement (423) entlang des zweiten Führungsflächenelements (41) mit einer offenen Fläche von weniger als 100 mm², wobei das genannte dritte offene Auslasselement (423) von dem ersten offenen Auslasselement (421) durch eine mindestens teilweise gekrümmte Wegdistanz von mindestens 100 cm und von dem zweiten offenen Auslasselement (422) durch eine Distanz von mindestens 50 cm entfernt ist, und (d) ein Zufuhrverbindungssystem (466), welches das erste offene Auslasselement (421), das zweite offene Auslasselement (422) und das dritte offene Auslasselement (423) mit mindestens einem Anschluss (427) verbindet, der geeignet ist, um mit einer oder der Schmiermittelzufuhr (100, 110) verbunden zu werden, um dem genannten ersten offenen Auslasselement (421), dem genannten zweiten offenen Auslasselement (422) und dem genannten dritten offenen Auslasselement (423) der zweiten Schmiereinrichtung das fluide Schmiermittel zuzuführen,
wobei vorteilhaft, mindestens für die erste und zweite Schmiereinrichtung (32, 42), jedes von dem ersten offenen Auslasselement (321, 421) und dem zweiten offenen Auslasselement (322, 422), oder den Zufuhrverbindungssystemen (366, 466) davon, mit einer getrennten Einrichtung (900) zur Steuerung der Zufuhr von Schmiermittel assoziiert ist.

9. Vorrichtung nach einem der vorhergehenden Ansprüche, welche ein zentralisiertes Zufuhrsystem (1000, 100, 110, 120, 130, 140) umfasst, das geeignet ist, um die Zufuhr von Schmiermittel unter Druck mindestens zu der ersten Schmiereinrichtung (32) und zu der zweiten Schmiereinrichtung (42) sowie vorteilhaft mindestens zu einer von der dritten Schmiereinrichtung (52) und/oder vierten Schmiereinrichtung (62) zu steuern.

10. Vorrichtung nach einem der vorhergehenden Ansprüche, welche eine Führungsbox (200) umfasst, die mit mindestens dem ersten Führungselement (30) und dem zweiten Führungselement (40) und möglicherweise dem dritten und/oder vierten Führungselement (50, 60) versehen ist.

11. Vorrichtung nach einem der vorhergehenden Ansprüche, wobei der Bewegungsweg (3), der den mindestens teilweise gekrümmten Wegabschnitt oder Abschnitte (3A) mit einem Weg mit teilweise gekrümmter Länge zwischen 30 cm und 500 cm umfasst, mindestens einen ersten im Wesentlichen linearen Wegabschnitt (3B) und einen zweiten im Wesentlichen linearen Wegabschnitt (3C) umfasst, der von dem ersten im Wesentlichen linearen Wegabschnitt (3B) entfernt ist, wodurch ein gekrümmter Wegabschnitt (3D) zwischen dem genannten ersten im Wesentlichen linearen Wegabschnitt (3B) und dem genannten zweiten im Wesentlichen linearen Wegabschnitt (3C) angeordnet ist, und wodurch das erste offene Auslasselement (321) der ersten Schmiereinrichtung (32) und das erste offene Auslasselement (421) der zweiten Schmiereinrichtung (42) in dem ersten im Wesentlichen linearen Wegabschnitt (3B) angeordnet sind, um eine Trockenschmierung jeweils mindestens eines im Wesentlichen linearen Abschnitts des ersten Führungselements (30) und mindestens eines im Wesentlichen linearen Abschnitts des zweiten Führungselements (40) sicherzustellen,
wobei vorteilhaft das erste offene Auslasselement (521) der dritten Schmiereinrichtung (52) und/oder das erste offene Auslasselement (621) der vierten Schmiereinrichtung (62) in dem ersten im Wesentlichen linearen Wegabschnitt (3B) des Bewegungswegs (3) angeordnet ist/sind, um eine Trockenschmierung jeweils mindestens eines im Wesentlichen linearen Abschnitts des dritten Führungselements (50) und/oder mindestens eines im Wesentlichen linearen Abschnitts des vierten Führungselements (60) sicherzustellen, während vorzugsweise das zweite offene Auslasselement (322) der ersten Schmiereinrichtung (32) und das zweite offene Auslasselement (422) der zweiten Schmiereinrichtung (42) in dem zweiten im Wesentlichen linearen Wegabschnitt (42) angeordnet sind, um eine Trockenschmierung jeweils mindestens eines im Wesentlichen linearen Abschnitts des ersten Führungselements (30) und eines im Wesentlichen linearen Abschnitts des zweiten Führungselements (40) sicherzustellen.

12. Vorrichtung nach einem der vorhergehenden Ansprüche, wobei mindestens ein Führungselement, ausgewählt aus der Gruppe bestehend aus dem ersten Führungselement (30), dem zweiten Führungselement (40), dem dritten Führungselement (50) und dem vierten Führungselement (60), bevor es mindestens teilweise gekrümmt ist oder nach der Entwicklung als lineares Element, im Wesentlichen die Form eines Stabs oder Rohrs aufweist, der/das mit einer Serie lateraler Öffnungen versehen ist, die entlang einer Helix platziert sind.

13. Vorrichtung nach einem der vorhergehenden Ansprüche, wobei mindestens ein Führungselement, ausgewählt aus der Gruppe bestehend aus dem ersten Führungselement (30), dem zweiten Führungselement (40), dem dritten Führungselement (50) und dem vierten Führungselement (60), im Wesentlichen die Form eines Stabs oder Rohrs aufweist, der/das mit mindestens zwei im Wesentlichen linearen Abschnitten versehen ist, die durch einen gekrümmten Wegabschnitt getrennt sind.

14. Vorrichtung nach einem der vorhergehenden Ansprüche, wobei mindestens ein Führungselement, ausgewählt aus der Gruppe bestehend aus dem ersten Führungselement (30), dem zweiten Führungselement (40), dem dritten Führungselement (50) und dem vierten Führungselement (60), derart geformt ist, um in jedem Moment des Verdrehens eines Behälters eine lineare Kontaktzone zwischen der äußeren Fläche des Behälters und dem mindestens einen Führungselement mit einer Länge von weniger als 0,5 cm und eine Flächenkontaktzone zwischen der äußeren Fläche des Behälters und dem mindestens einen Führungselement von weniger als 5 mm² mit einer Fläche des Behälters zu definieren, der sich entlang des betreffenden Führungselements bewegt,
wobei vorteilhaft mindestens ein Führungselement, ausgewählt aus der Gruppe bestehend aus dem ersten Führungselement (30), dem zweiten Führungselement (40), dem dritten Führungselement (50) und dem vierten Führungselement (60), mindestens zwei längliche getrennte Elementabschnitte oder Teile umfasst, die jeweils derart geformt sind, um in jedem Moment des Verdrehens eines Behälters eine lineare Kontaktzone zwischen der äußeren Fläche des Behälters und einem länglichen getrennten Führungselement des genannten mindestens einen Führungselements mit einer Länge von weniger als 0,5 cm und eine Flächenkontaktzone zwischen der äußeren Fläche des Behälters und einem länglichen getrennten Führungselement des genannten mindestens einen Führungselements von weniger als 5 mm² zu definieren.

15. Vorrichtung nach einem der vorhergehenden Ansprüche, wobei mindestens ein Führungselement, ausgewählt aus der Gruppe bestehend aus dem ersten Führungselement (30), dem zweiten Führungselement (40), dem dritten Führungselement (50) und dem vierten Führungselement (60), mit einem Kühlsystem versehen ist, wobei das genannte Kühlsystem vorteilhaft in der Form eines Rohrs oder Kanals ist, das/der geeignet ist, um mit einer Kühlmittelzufuhreinrichtung (200) verbunden zu werden.

16. Vorrichtung nach einem der vorhergehenden Ansprüche, wobei mindestens ein Führungselement, ausgewählt aus der Gruppe bestehend aus dem ersten Führungselement (30), dem zweiten Führungselement (40), dem dritten Führungselement (50) und dem vierten Führungselement (60), mit einem Temperatursensor (201) versehen oder assoziiert ist, während die Vorrichtung vorteilhaft ferner mit einem Steuersystem assoziiert ist, das eine oder mehrere Informationen oder Signale von einem oder mehreren Sensoren empfängt, um Schmierschritte zu steuern und/oder um einen Kühlschritt zu steuern und/oder um eine Fördergeschwindigkeit zu steuern.

17. Vorrichtung nach einem der vorhergehenden Ansprüche zum Bewegen von Behältern in einer zentralen Bewegungsrichtung parallel zu einer zentralen Verdrehachse, wobei mindestens ein gasförmiges Schmiermittel unter Druck als fluides Schmiermittel für mindestens einen Abschnitt eines Führungsflächen-Rohrelements verwendet wird, ausgewählt aus der Gruppe bestehend aus dem ersten Führungsflächenelement, dem zweiten Führungsflächenelement, dem dritten Führungsflächenelement und dem vierten Führungsflächenelement, wobei der genannte Abschnitt des Führungsflächen-Rohrelements mit einer Serie von Injektoröffnungen versehen ist, die voneinander durch eine Distanz von weniger als 5 cm entfernt sind, wobei die genannten Injektoröffnungen geeignet sind, um das gasförmige Schmiermittel entlang einer zentralen Richtung mit mindestens einer Richtungskomponente parallel zu der zentralen Bewegungsrichtung auszustoßen,
wobei vorteilhaft mindestens einige Injektoröffnungen geeignet sind, um einen Strom von gasförmigem Schmiermittel zu lenken, um das Verdrehen von Behältern zu erleichtern.

18. Förderer zum Bewegen von Behältern (2) entlang eines Bewegungswegs (3A), wobei der genannte Förderer mindestens eine Vorrichtung nach einem der vorhergehenden Ansprüche 1 bis 17 umfasst.

19. Verwendung einer Verdrehvorrichtung nach einem der vorhergehenden Ansprüche 1 bis 17, um ein Verdrehen von Behältern sicherzustellen, während sie sich die Verdrehvorrichtung entlang bewegen,
wobei vorteilhaft die Temperatur des mindestens einen Führungselements (30, 40, 50, 60) gemessen wird, um eine Kühlung mindestens eines Führungselements (30, 40, 50, 60) zu steuern und/oder um die Zufuhr von Schmiermittel zu dem genannten mindestens einen Führungselement (30, 40, 50, 60) zu steuern.

## Revendications

1. Dispositif (1) pour tourner des récipients (2) tout en déplaçant lesdits récipients le long d'un trajet de déplacement (3) comprenant une partie de trajet au moins partiellement incurvée (3A) avec un trajet longitudinal au moins partiellement incurvé compris entre 30 cm et 500 cm pour garantir que chaque récipient (2) se déplaçant à travers ladite partie de trajet au moins partiellement incurvée (3A) suit au moins un mouvement incurvé, lesdits récipients (2) ayant au moins un système de revêtement extérieur (20), ladite partie de trajet au moins partiellement incurvée (3A) s'étendant entre une entrée (4) pour les conteneurs dans la partie de trajet au moins partiellement incurvée (3A) et une sortie (5) pour les conteneurs (2) après s'être déplacés à travers la partie de trajet au moins partiellement incurvée (3A), moyennant quoi entre ladite entrée (4) et ladite sortie (5), la partie de trajet au moins partiellement incurvée (3A) comprend au moins :
- un support (10) ;
- un premier élément de guidage (30) fixé audit support (10), ledit premier élément de guidage (30) ayant au moins un premier élément de face de guidage (31) adapté pour entrer en contact avec au moins une première partie d'un système de revêtement extérieur (20) des conteneurs (2) se déplaçant dans la partie de trajet au moins partiellement incurvée (3A) ;
- un deuxième élément de guidage (40) fixé audit support (10), ledit deuxième élément de guidage (40) ayant au moins un deuxième élément de face de guidage (41) distant du premier élément de face de guidage (31) et adapté pour entrer en contact avec au moins une deuxième partie du système de revêtement extérieur (20) des conteneurs (2) se déplaçant dans la partie de trajet au moins partiellement incurvée (3A), ladite deuxième partie du système de revêtement extérieur (20) des conteneurs étant différente de la première partie du système de revêtement extérieur (20) des conteneurs (2) ;
- un premier moyen de lubrification (32) adapté pour assurer une lubrification sèche d'au moins une partie du premier élément de guidage (30) en fournissant un lubrifiant fluide choisi dans le groupe constitué par un lubrifiant liquide, un lubrifiant gazeux et des mélanges de ceux-ci, le long du premier élément de face de guidage (31), le premier moyen de lubrification (32) ayant au moins (a) un premier élément ouvert de sortie (321) le long du premier élément de face de guidage (31) avec une surface ouverte extérieure de moins de 100 mm², (b) un second élément ouvert de sortie (322) le long du premier élément de face de guidage (31) avec une surface ouverte extérieure de moins de 100 mm², ledit second élément ouvert de sortie (322) étant distant du premier élément ouvert de sortie (321) d'une distance de trajet au moins partiellement incurvée d'au moins 10 cm, et (c) un système de connexion d'alimentation (366) connectant le premier élément ouvert de sortie (321) et le second élément ouvert de sortie (322) à un connecteur (327) adapté pour être connecté à une alimentation en lubrifiant (100) pour alimenter ledit premier élément ouvert de sortie (321) et ledit second élément ouvert de sortie (322) du premier moyen de lubrification (32) avec le lubrifiant fluide ; et
- un second moyen de lubrification (42) adapté pour assurer une lubrification sèche d'au moins une partie du second élément de guidage (40) en fournissant le lubrifiant fluide le long du second élément de face de guidage (41), moyennant quoi le second moyen de lubrification (42) a au moins (a) un premier élément ouvert de sortie (421) le long du second élément de face de guidage (41) avec une surface extérieure ouverte de moins de 100 mm², (b) un second élément ouvert de sortie (422) le long du second élément de face de guidage (41) avec une surface ouverte de moins de 100 mm², ledit second élément ouvert de sortie (422) du second moyen de lubrification (42) étant distant du premier élément ouvert de sortie (421) du second moyen de lubrification (42) d'une distance de trajet au moins partiellement incurvée d'au moins 10 cm, et (c) un système de connexion d'alimentation (466) connectant le premier élément ouvert de sortie (421) et le second élément ouvert de sortie (422) du second moyen de lubrification (42) à un connecteur (427) adapté pour être connecté à une ou à l'alimentation en lubrifiant (100, 110) pour alimenter ledit premier élément ouvert de sortie (421) et ledit second élément ouvert de sortie (422) du second moyen de lubrification (42) avec le lubrifiant fluide,
dans lequel, avantageusement, au moins l'un du premier élément ouvert de sortie (321) et du second élément ouvert de sortie (322) du premier moyen de lubrification (32) et au moins l'un du premier élément ouvert de sortie (421) et du second élément ouvert de sortie (422) du second moyen de lubrification (42) ont une forme extérieure choisie dans le groupe constitué par une forme extérieure sensiblement circulaire avec un diamètre extérieur compris entre 0,5 mm et 5 mm, une forme extérieure sensiblement elliptique avec un diamètre équivalent compris entre 0,5mm et 5mm, une forme extérieure allongée avec une largeur moyenne comprise entre 0,5mm et 5mm et une longueur moyenne supérieure à la largeur moyenne, mais comprise entre 3mm et 50mm, et des combinaisons de parties de celles-ci.

2. Dispositif de la revendication 1, dans lequel au moins l'un du premier élément ouvert de sortie (321) et du second élément ouvert de sortie (322) du premier moyen de lubrification (32) et au moins l'un du premier élément ouvert de sortie (421) et du second élément ouvert de sortie (422) du second moyen de lubrification (42) ont la forme d'une rainure (G) avec une largeur moyenne comprise entre 0,5 mm et 5 mm et une longueur moyenne (L) supérieure à la largeur moyenne et comprise entre 3 mm et 50 mm.

3. Dispositif de la revendication 1 ou 2, dans lequel le premier élément de guidage (30) comprend au moins deux premiers éléments de face de guidage distants l'un de l'autre et choisis dans le groupe constitué de tiges au moins partiellement incurvées et d'éléments allongés au moins partiellement incurvés (301, 302), chacun desdits au moins deux premiers éléments de face de guidage (301, 302) du premier élément de guidage (30), lorsqu'il est déplié dans une forme sensiblement droite, ayant une face de contact sensiblement incurvée définissant une face de contact linéaire adaptée pour entrer en contact de manière sensiblement continue avec une partie d'un système de revêtement extérieur (20) du conteneur (2) lorsqu'il se déplace dans le dispositif, ladite face de contact linéaire ayant une largeur inférieure à 0,5 mm, tandis que le second élément de guidage (40) comprend au moins deux seconds éléments de face de guidage distants l'un de l'autre et choisis dans le groupe constitué de tiges au moins partiellement incurvées et d'éléments allongés au moins partiellement incurvés (401, 402), chacun desdits au moins deux seconds éléments de face de guidage (401, 402) du deuxième élément de guidage (40), lorsqu'il est déplié dans une forme sensiblement droite, ayant une face de contact sensiblement incurvée définissant une face de contact linéaire adaptée pour entrer en contact de manière sensiblement continue avec une partie d'un système de revêtement extérieur (20) du récipient (2) lorsqu'il se déplace dans le dispositif, ladite face de contact linéaire ayant une largeur inférieure à 0,5 mm.

4. Dispositif de la revendication 3, dans lequel les tiges courbes ou les éléments allongés courbes (301, 302 ; 401, 402) du premier élément de face de guidage (31) et/ou du second élément de face de guidage (41) sont chacun munis d'au moins un premier passage ou canal se terminant dans un premier élément ouvert de sortie (321, 421) et un second passage ou canal se terminant dans un second élément ouvert de sortie (322, 422) du premier moyen de lubrification (32) ou du second moyen de lubrification (42), moyennant quoi par rapport auxdites tiges courbes ou auxdits éléments allongés courbes (301, 302 ; 401, 402) lorsqu'ils sont dépliés en forme droite, ledit premier élément ouvert de sortie (321, 421) et ledit second élément ouvert de sortie (322, 422) de chaque tige courbe ou élément allongé courbe (301, 302 ; 401, 402) s'étendent le long d'une face de contact courbe sensiblement linéaire de la tige courbe ou de l'élément allongé courbe (301, 302 ; 401, 402) pris en considération avec une largeur inférieure à 0,5 mm, ledit premier élément ouvert de sortie (321, 421) et ledit second élément ouvert de sortie (322, 422) étant distants d'une distance d'au moins 10cm.

5. Dispositif de l'une quelconque des revendications 1 à 4, comprenant en outre :
- un troisième élément de guidage (50) fixé audit support (10), ledit troisième élément de guidage (50) comportant au moins un troisième élément de face de guidage (51) adapté pour entrer en contact avec au moins une partie de la face inférieure (201) des récipients (2) se déplaçant dans la partie de trajet au moins partiellement incurvée (3A) ; et
- un troisième moyen de lubrification (52) adapté pour assurer une lubrification sèche d'au moins une partie du troisième élément de guidage (50) en fournissant le lubrifiant fluide le long du troisième élément de face de guidage (51), moyennant quoi le troisième moyen de lubrification (52) a au moins (a) un premier élément ouvert de sortie (521) le long du troisième élément de face de guidage (51) avec une surface extérieure ouverte de moins de 100 mm², (b) un deuxième élément ouvert de sortie (522) le long du troisième élément de face de guidage (51) avec une surface ouverte de moins de 100 mm², (b) un deuxième élément ouvert de sortie (522) le long du troisième élément de face de guidage (51) avec une surface ouverte de moins de 100 mm², ledit deuxième élément ouvert de sortie (522) étant distant du premier élément ouvert de sortie (521) d'une distance de trajet au moins partiellement incurvée d'au moins 10 cm, et (c) un système de connexion d'alimentation (566) connectant le premier élément ouvert de sortie (521) et le deuxième élément ouvert de sortie (522) à un connecteur (527) adapté pour être connecté à une ou à l'alimentation en lubrifiant (100, 110, 120) pour alimenter ledit premier élément ouvert de sortie (521) et ledit deuxième élément ouvert de sortie (522) du troisième moyen de lubrification (52) avec le lubrifiant fluide, dans lequel, avantageusement, au moins l'un des premier et deuxième éléments ouverts de sortie (521, 522) du troisième moyen de lubrification (52) a la forme d'une rainure (G) avec une largeur moyenne comprise entre 0,5 mm et 5 mm et une longueur moyenne (L) supérieure à la largeur moyenne et comprise entre 3 mm et 50 mm.

6. Le dispositif de la revendication 5, comprenant en outre :
- un quatrième élément de guidage (60) fixé audit support (10), ledit quatrième élément de guidage (60) ayant au moins un quatrième élément de face de guidage (61) adapté pour entrer en contact avec au moins une seconde partie de la face supérieure (202) des récipients (2) se déplaçant dans la partie de trajet au moins partiellement incurvée (3A) ; et
- un quatrième moyen de lubrification (62) adapté pour assurer une lubrification à sec d'au moins une partie du quatrième élément de guidage (60) en fournissant le lubrifiant fluide le long du quatrième élément de face de guidage (61), le quatrième moyen de lubrification (62) ayant (a) un premier élément ouvert de sortie (621) le long de la quatrième face de guidage avec une surface extérieure ouverte de moins de 100 mm², (b) un second élément ouvert de sortie (622) le long du quatrième élément de face de guidage (61) avec une surface ouverte de moins de 100 mm², ledit second élément ouvert de sortie (622) étant distant du premier élément ouvert de sortie (621) d'une distance de trajet incurvé d'au moins 10 cm, et (c) un système de connexion d'alimentation (666) connectant le premier élément ouvert de sortie (621) et le second élément ouvert de sortie (622) à un connecteur (627) adapté pour être connecté à une ou à l'alimentation en lubrifiant (100, 110, 120, 130) pour alimenter ledit premier élément ouvert de sortie (621) et ledit second élément ouvert de sortie (622) du quatrième moyen de lubrification (62) avec le lubrifiant fluide,
dans lequel, avantageusement, au moins l'une des première et seconde sorties ouvertes (621, 622) du quatrième moyen de lubrification (62) a la forme d'une rainure (G) avec une largeur moyenne comprise entre 0,5 mm et 5 mm et une longueur moyenne (L) supérieure à la largeur moyenne et comprise entre 3 mm et 50 mm.

7. Dispositif des revendications 5 et 6, dans lequel le premier élément de face de guidage (31) du premier élément de guidage (30) définit une surface au moins partiellement incurvée (303) en contact sensiblement continu avec une partie du système de face latérale (203) choisie dans le groupe constitué par une zone linéaire de largeur inférieure à 0,5cm et une zone de surface inférieure à 5mm² du système de face latérale (203),
dans lequel le deuxième élément de face de guidage (41) du deuxième élément de guidage (40) définit une surface incurvée en contact sensiblement continu avec une partie du système de face latérale (203) choisie dans le groupe constitué par une zone linéaire d'une largeur inférieure à 0,5 cm et une zone de surface inférieure à 5 mm² du système de face latérale (203),
dans lequel le troisième élément de face de guidage (51) du troisième élément de guidage (50) définit une surface incurvée en contact sensiblement continu avec au moins une partie de la face inférieure (201) du récipient (2) choisie dans le groupe constitué par une zone linéaire d'une largeur inférieure à 0,5 cm et une zone de surface inférieure à 5 mm² de la face inférieure (201), et
dans lequel le quatrième élément de face de guidage (61) du quatrième élément de guidage (60) définit une surface incurvée en contact susbstantiellement continu avec au moins une partie de la face supérieure (202) du récipient (2) choisie dans le groupe constitué par une zone linéaire d'une largeur inférieure à 0,5 cm et une zone de surface inférieure à 5 mm² de la face supérieure (202),
dans lequel avantageusement, au moins un des premier et second éléments ouverts de sortie (321, 322) du premier moyen de lubrification (32), au moins un des premier et second éléments ouverts de sortie (421, 422) du second moyen de lubrification (42), au moins un des premier et second éléments ouverts de sortie (521, 522) du troisième moyen de lubrification (52), et au moins l'un des premier et second éléments ouverts de sortie (621, 622) du quatrième moyen de lubrification (62), de préférence tous lesdits premier et second éléments ouverts de sortie (321, 421, 521, 621, 322, 422, 522, 622) ont la forme d'une rainure (G) avec une largeur moyenne comprise entre 0,5 mm et 5 mm et une longueur moyenne (L) supérieure à la largeur moyenne et comprise entre 3mm et 50mm.

8. Dispositif de l'une quelconque des revendications précédentes, dans lequel le premier moyen de lubrification (32) est adapté pour assurer une lubrification à sec d'au moins une partie du premier élément de guidage (30) en fournissant le lubrifiant fluide le long du premier élément de face de guidage (31), de sorte que le premier moyen de lubrification (32) a au moins (a) un premier élément ouvert de sortie (321) le long du premier élément de face de guidage (31) avec une surface extérieure ouverte de moins de 100 mm², (b) un deuxième élément ouvert de sortie (322) le long du premier élément de face de guidage (31) avec une surface ouverte de moins de 100 mm², ledit deuxième élément ouvert de sortie étant distant du premier élément ouvert de sortie d'une distance de trajet au moins partiellement incurvée d'au moins 50 cm, (c) un troisième élément ouvert de sortie (323) le long du premier élément de face de guidage (31) avec une surface ouverte de moins de 100 mm², ledit troisième élément ouvert de sortie étant distant du premier élément ouvert de sortie (321) d'une distance de trajet au moins partiellement incurvée d'au moins 100 cm et du deuxième élément ouvert de sortie (322) d'une distance d'au moins 50 cm, et (d) un système de raccordement d'alimentation (366) reliant le premier élément ouvert de sortie (321) le deuxième élément ouvert de sortie (322) et le troisième élément ouvert de sortie (323) à au moins un connecteur (327) adapté pour être connecté à une alimentation en lubrifiant (100) pour alimenter ledit premier élément ouvert de sortie (321), ledit deuxième élément ouvert de sortie (322) et ledit troisième élément ouvert de sortie (323) du premier moyen de lubrification (32) avec le lubrifiant fluide ; et
dans lequel le deuxième moyen de lubrification (42) est adapté pour assurer une lubrification à sec d'au moins une partie du deuxième élément de guidage (40) en fournissant le lubrifiant fluide le long du deuxième élément de face de guidage (41), le deuxième moyen de lubrification (42) ayant au moins (a) un premier élément ouvert de sortie (421) le long du premier élément de face de guidage (41) avec une surface extérieure ouverte de moins de 100 mm², (b) un deuxième élément ouvert de sortie (422) le long du premier élément de face de guidage (41) avec une surface ouverte de moins de 100 mm², ledit deuxième élément ouvert de sortie (422) étant distant du premier élément ouvert de sortie d'une distance de trajet au moins partiellement incurvée d'au moins 50 cm, (c) un troisième élément ouvert de sortie (423) le long du deuxième élément de face de guidage (41) avec une surface ouverte de moins de 100 mm², ledit troisième élément ouvert de sortie (423) étant distant du premier élément ouvert de sortie (421) d'une distance de trajet au moins partiellement incurvée d'au moins 100 cm et du deuxième élément ouvert de sortie (422) d'une distance d'au moins 50 cm, et (d) un système de connexion d'alimentation (466) connectant le premier élément ouvert de sortie (421), le deuxième élément ouvert de sortie (422) et le troisième élément ouvert de sortie (423) à au moins un connecteur (427) adapté pour être connecté à une ou à l'alimentation en lubrifiant (100, 110) pour alimenter ledit premier élément ouvert de sortie (421), ledit deuxième élément ouvert de sortie (422) et ledit troisième élément ouvert de sortie (423) du deuxième moyen de lubrification avec le lubrifiant fluide,
dans lequel, avantageusement, au moins pour les premier et second moyens de lubrification (32, 42), chacun du premier élément ouvert de sortie (321, 421) et du second élément ouvert de sortie (322, 422), ou les systèmes de connexion d'alimentation (366, 466) de ceux-ci est associé à un moyen distinct (900) pour commander l'alimentation en lubrifiant.

9. Dispositif de l'une quelconque des revendications précédentes, qui comprend un système d'alimentation centralisé (1000, 100, 110, 120, 130, 140) adapté pour commander l'alimentation en lubrifiant sous pression au moins au premier moyen de lubrification (32) et au deuxième moyen de lubrification (42), ainsi qu'avantageusement au moins à l'un des troisième moyen de lubrification (52) et/ou quatrième moyen de lubrification (62).

10. Dispositif de l'une quelconque des revendications précédentes, qui comprend un boîtier de guidage (200) muni d'au moins le premier élément de guidage (30) et le deuxième élément de guidage (40), et éventuellement le troisième et/ou le quatrième élément de guidage (50, 60).

11. Dispositif de l'une quelconque des revendications précédentes, dans lequel le trajet de déplacement (3) comprenant la ou les parties de trajet au moins partiellement incurvées (3A) avec un trajet au moins partiellement incurvé de longueur comprise entre 30 cm et 500 cm comprend au moins une première partie de trajet sensiblement linéaire (3B) et une seconde partie de trajet sensiblement linéaire (3C) distante de la première partie de trajet sensiblement linéaire (3B), moyennant quoi une partie de trajet incurvée (3D) est située entre ladite première partie de trajet sensiblement linéaire (3B) et ladite seconde partie de trajet sensiblement linéaire (3C), et dans lequel le premier élément ouvert de sortie (321) du premier moyen de lubrification (32) et le premier élément ouvert de sortie (421) du second moyen de lubrification (42) sont situés dans la première partie de trajet sensiblement linéaire (3B) pour assurer une lubrification à sec respectivement d'au moins une partie sensiblement linéaire du premier élément de guidage (30) et d'au moins une partie sensiblement linéaire du second élément de guidage (40),
dans lequel, avantageusement, le premier élément ouvert de sortie (521) du troisième moyen de lubrification (52) et/ou le premier élément ouvert de sortie (621) du quatrième moyen de lubrification (62) est/sont situé(s) dans la première portion de trajet sensiblement linéaire (3B) du chemin de déplacement (3) pour assurer une lubrification à sec de respectivement au moins une portion sensiblement linéaire du troisième élément de guidage (50) et/ou au moins une portion sensiblement linéaire du quatrième élément de guidage (60),
tandis que, de préférence, le deuxième élément ouvert de sortie (322) du premier moyen de lubrification (32) et le deuxième élément ouvert de sortie (422) du deuxième moyen de lubrification (42) sont situés dans la deuxième partie de trajet sensiblement linéaire (42) pour assurer une lubrification à sec respectivement d'au moins une partie sensiblement linéaire du premier élément de guidage (30) et d'une partie sensiblement linéaire du deuxième élément de guidage (40).

12. Dispositif de l'une quelconque des revendications précédentes, dans lequel au moins un élément de guidage choisi dans le groupe constitué par le premier élément de guidage (30), le deuxième élément de guidage (40), le troisième élément de guidage (50), et le quatrième élément de guidage (60) avant d'être au moins partiellement incurvé ou après développement en tant qu'élément linéaire a sensiblement la forme d'une tige ou d'un tube pourvu d'une série d'ouvertures latérales placées le long d'une hélice .

13. Dispositif de l'une quelconque des revendications précédentes, dans lequel au moins un élément de guidage choisi dans le groupe constitué par le premier élément de guidage (30), le deuxième élément de guidage (40), le troisième élément de guidage (50), et le quatrième élément de guidage (60) a sensiblement la forme d'une tige ou d'un tube muni d'au moins deux portions sensiblement linéaires séparées par une portion de trajectoire courbe.

14. Dispositif de l'une quelconque des revendications précédentes, dans lequel au moins un élément de guidage choisi dans le groupe constitué par le premier élément de guidage (30), le deuxième élément de guidage (40), le troisième élément de guidage (50), et le quatrième élément de guidage (60) est conformé de manière à définir à chaque instant de la rotation d'un récipient, une zone de contact linéaire entre la surface extérieure du récipient et le au moins un élément de guidage d'une longueur inférieure à 0,5cm et une zone de contact superficiel entre la surface extérieure du récipient et le au moins un élément de guidage de moins de 5mm² avec une face du récipient se déplaçant le long de l'élément de guidage considéré, dans lequel, avantageusement, au moins un élément de guidage choisi dans le groupe constitué par le premier élément de guidage (30), le deuxième élément de guidage (40), le troisième élément de guidage (50) et le quatrième élément de guidage (60) comprend au moins deux portions ou parties d'élément distinctes allongées, qui sont chacune formées de manière à définir à chaque moment de la rotation d'un récipient, une zone de contact linéaire entre la surface extérieure du récipient et un élément de guidage distinct allongé dudit au moins un élément de guidage avec une longueur inférieure à 0,5 cm et une zone de contact de surface entre la surface extérieure du récipient et l'élément de guidage distinct allongé dudit au moins un élément de guidage avec une longueur inférieure à 0,5 cm et une zone de contact de surface entre la surface extérieure du récipient et un élément de guidage distinct allongé dudit au moins un élément de guidage de moins de 5mm².

15. Dispositif de l'une quelconque des revendications précédentes, dans lequel au moins un élément de guidage choisi dans le groupe constitué par le premier élément de guidage (30), le deuxième élément de guidage (40), le troisième élément de guidage (50) et le quatrième élément de guidage (60) est muni d'un système de refroidissement, ledit système de refroidissement se présentant avantageusement sous la forme d'un tube ou d'un canal adapté pour être relié à un moyen d'alimentation en liquide de refroidissement (200).

16. Dispositif de l'une quelconque des revendications précédentes, dans lequel au moins un élément de guidage choisi dans le groupe constitué par le premier élément de guidage (30), le deuxième élément de guidage (40), le troisième élément de guidage (50) et le quatrième élément de guidage (60) est pourvu ou associé à un capteur de température (201), tandis qu'avantageusement, le dispositif est en outre associé à un système de contrôle recevant une ou plusieurs informations ou signaux d'un ou plusieurs capteurs, pour contrôler des étapes de lubrification et/ou pour contrôler une étape de refroidissement et/ou pour contrôler une vitesse de convoyage.

17. Dispositif de l'une quelconque des revendications précédentes pour déplacer des récipients suivant une direction de déplacement centrale parallèle à un axe de rotation central, dans lequel au moins un lubrifiant gazeux sous pression est utilisé comme lubrifiant fluide pour au moins une partie d'un élément tubulaire à face de guidage choisi dans le groupe constitué par le premier élément à face de guidage, le deuxième élément à face de guidage, le troisième élément de face de guidage et le quatrième élément de face de guidage, dans lequel ladite partie de l'élément de tube de face de guidage est pourvue d'une série d'ouvertures d'injecteur distantes les unes des autres d'une distance inférieure à 5 cm, lesdites ouvertures d'injecteur étant adaptées pour expulser le lubrifiant gazeux le long d'une direction centrale ayant au moins une composante de direction parallèle à la direction de déplacement centrale,
dans lequel, avantageusement, au moins certaines ouvertures d'injecteur sont adaptées pour diriger un flux de lubrifiant gazeux afin de faciliter la rotation des conteneurs.

18. Convoyeur pour déplacer des récipients (2) le long d'un chemin de déplacement (3A), ledit convoyeur comprenant au moins un dispositif de l'une quelconque des revendications précédentes 1 à 17.

19. Utilisation d'un dispositif de rotation selon l'une quelconque des revendications 1 à 17, pour assurer une rotation des récipients lors de leur déplacement le long du dispositif de rotation, dans laquelle, avantageusement, on mesure la température du au moins un élément de guidage (30, 40, 50, 60) pour contrôler un refroidissement du au moins un élément de guidage (30, 40, 50, 60), et/ou pour contrôler l'alimentation en lubrifiant dudit au moins un élément de guidage (30, 40, 50, 60).
